# EUROPEAN PATENT APPLICATION

(11) **EP 4 239 984 A1**
(43) Date of publication of application: **06.09.2023**
(21) Application number: 21897115.8
(22) Date of filing: 26.11.2021
(51) Int. Cl.: H04M 1/02, H04N 5/225, H04N 5/357

(54) **SHAPE MEMORY ALLOY MOTOR, MOTOR MODULE, CAMERA MODULE, AND ELECTRONIC DEVICE**

(30) Priority: 28.11.2020 CN 202011367723
(71) Applicant: Huawei Technologies Co., Ltd., Shenzhen, Guangdong 518129 (CN)
(72) Inventor: HUANG, Dong, Shenzhen, Guangdong 518129 (CN); LI, Deliang, Shenzhen, Guangdong 518129 (CN); ZHANG, Le, Shenzhen, Guangdong 518129 (CN); WANG, Gang, Shenzhen, Guangdong 518129 (CN)
(74) Representative: Gill Jennings & Every LLP
(86) International application number: PCT/CN2021/133364
(87) International publication number: WO 2022/111615

(57) **Abstract**

This application provides a camera module (200), a motor module (202), an SMA motor (600), and an electronic device (100). The camera module (200) includes a lens array (2022), an SMA wire, a drive port of the SMA wire, and an electrical connector electrically connected between the SMA wire and the drive port of the SMA wire. The electrical connector may form a tight coupling relationship with at least one of the following: the electrical connector, the SMA wire, and another electrical connector. Solutions provided in this application help reduce a degree of magnetic interference to a magnetic sensitive electronic component in the camera module (200).

## Description

This application claims priority to Chinese Patent Application No. 202011367723.7, filed with the China National Intellectual Property Administration on November 28, 2020 and entitled "SHAPE MEMORY ALLOY MOTOR, MOTOR MODULE, CAMERA MODULE, AND ELECTRONIC DEVICE", which is incorporated herein by reference in its entirety.

### TECHNICAL FIELD

This application relates to the field of electronic devices, and more specifically, to a shape memory alloy motor, a motor module, a camera module, and an electronic device.

### BACKGROUND

A user usually expects that a camera of a mobile phone can implement a plurality of image shooting scenarios, for example, shooting a distant image, and shooting in a close-range scenario by using a wide aperture. A camera module that can implement a plurality of image shooting scenarios usually has a large quantity of electrical connection lines with complex cabling. In a case in which the electrical connection line is connected to a low-frequency current, the electrical connection line may generate an induced magnetic field. Such an induced magnetic field affects normal operation of a magnetic sensitive electronic component (such as an image sensor or a power supply of the image sensor) in the camera module.

### SUMMARY

This application provides a shape memory alloy motor, a motor module, a camera module, and an electronic device, to reduce an interference magnetic field generated by the shape memory alloy motor.

According to a first aspect, a shape memory alloy SMA motor is provided, including a first SMA wire, a second SMA wire, a third SMA wire, and a fourth SMA wire that are adj acent to each other head to tail in sequence, a spring plate, a first electrical connection port, and a second electrical connection port.

The spring plate includes a spring plate body, and a first spring plate arm and a second spring plate arm that are located on two sides of the spring plate body. The spring plate body includes a first end part and a second end part, the first end part is mechanically connected to the first SMA wire and the fourth SMA wire, the second end part is mechanically connected to the second SMA wire and the third SMA wire, the first spring plate arm is connected to the second end part and extends to the first end part, and the second spring plate arm is connected to the first end part and extends to the second end part, so that the first spring plate arm resists deformation of the first SMA wire and the second SMA, and the second spring plate arm resists deformation of the third SMA wire and the fourth SMA wire.

The first electrical connection port is electrically connected to a first end of the first SMA wire by using a first electrical connector. The second electrical connection port is electrically connected to a second end of the first SMA wire by using a second electrical connector. The first electrical connector has a tight coupling relationship with one or more of the first SMA wire, the first electrical connector, and the second electrical connector.

In an example, the first SMA wire may be, for example, any one of SMA 611, SMA 612, SMA 613, and SMA 614 in the following specific embodiments.

In an example, that the first SMA wire, the second SMA wire, the third SMA wire, and the fourth SMA wire are adjacent to each other head to tail may mean that a tail end of the first SMA wire is adjacent to a head end of the second SMA wire, a tail end of the second SMA wire is adjacent to a head end of the third SMA wire, a tail end of the third SMA wire is adjacent to a head end of the fourth SMA wire, and a tail end of the fourth SMA wire is adjacent to a head end of the first SMA wire.

In another example, that the first SMA wire, the second SMA wire, the third SMA wire, and the fourth SMA wire are adjacent to each other head to tail may mean that a tail end of the first SMA wire is adjacent to a head end of the second SMA wire, a tail end of the second SMA wire is adjacent to a head end of the third SMA wire, a tail end of the third SMA wire is adjacent to a head end of the fourth SMA wire, and a tail end of the fourth SMA wire is adjacent to a head end of another SMA wire.

In an example, when there is a tight coupling relationship between an electrical connection part A and an electrical connection part B, it may mean that a first electrical connection portion of the electrical connection part A and a second electrical connection portion of the electrical connection part B are disposed with a small spacing between them, and a current direction on the first electrical connection portion is opposite to a current direction on the second electrical connection portion. That the first electrical connection portion and the second electrical connection portion are disposed with a spacing between them mean that, in a horizontal direction of the first electrical connection portion, the first electrical connection portion and the second electrical connection portion are disposed opposite to and spaced from each other.

A "vertical direction" of the first electrical connection portion may be, for example, an extension direction of the first electrical connection portion. The concept of "vertical direction" may be used for, for example, a rod, a line, an arm, a stick, a column, or another component with a distinct extension direction. The "horizontal direction" of the first electrical connection portion may correspond to the "vertical direction" of the first electrical connection portion. The "horizontal direction" of the first electrical connection portion may be, for example, any direction that is vertically disposed relative to the "vertical direction" of the first electrical connection portion.

Loose coupling is relative to tight coupling. In an example, when there is a loose coupling relationship between the electrical connection part A and the electrical connection part B, it may mean that the first electrical connection portion of the electrical connection part A and the second electrical connection portion of the electrical connection part B are disposed with a large spacing, and a current direction on the first electrical connection portion is opposite to a current direction on the second electrical connection portion.

In this application, the SMA motor may have a plurality of SMA wires and a spring plate, so that the SMA motor can implement displacement driving in a plurality of directions of a plane in which the spring plate is located. In addition, the first electrical connector and a conductive component in the SMA motor are disposed to form a tight coupling relationship, which helps reduce an interference magnetic field generated by the SMA motor.

With reference to the first aspect, in some implementations of the first aspect, the first electrical connector includes a first electrical connection portion, and any one of the first SMA wire, the first electrical connector, and the second electrical connector includes a second electrical connection portion. The first electrical connection portion is spaced from the second electrical connection portion, a maximum spacing distance between the first electrical connection portion and the second electrical connection portion is less than a preset threshold, and when the first SMA wire is driven, directions of a current on the first electrical connection portion and a current on the second electrical connection portion are opposite, to form the tight coupling relationship between the first electrical connection portion and the second electrical connection portion.

In an example, that the first electrical connection portion is spaced from the second electrical connection portion may mean that in a horizontal direction of the first electrical connection portion, the first electrical connection portion is opposite to the second electrical connection portion, and there is a spacing between the first electrical connection portion and the second electrical connection portion.

The spacing distance between the first electrical connection portion and the second electrical connection portion may be a distance between the first electrical connection portion and the second electrical connection portion in the horizontal direction of the first electrical connection portion. For example, a straight line that is disposed in parallel relative to the horizontal direction of the first electrical connection portion passes through a first point on the first electrical connection portion and a second point on the second electrical connection portion, and a distance between the first point and the first point may be a distance between the first electrical connection portion and the second electrical connection portion in the horizontal direction of the first electrical connection portion.

In an example, that the first SMA wire is driven may mean that the first electrical connection port or the second electrical connection port outputs a drive signal to the first SMA wire, so that the first SMA wire contracts due to a temperature change.

In this application, a placement manner of the first electrical connector, an electrical connection relationship between the first electrical connector and another conductive component, and the like are set, so that a tight coupling relationship is formed between the first electrical connector and the conductive component in the SMA motor, to reduce an interference magnetic field generated by the SMA motor.

With reference to the first aspect, in some implementations of the first aspect, the spacing between the first electrical connection port and the second electrical connection port is less than a first preset spacing.

In this application, reduction of a spacing between the plurality of electrical connection ports facilitates arrangement of the electrical connection ports in the SMA motor, and helps increase a degree to which interference magnetic fields of the first electrical connector, the second electrical connector, and the first SMA wire cancel each other, so that an interference magnetic field generated by the SMA motor is reduced.

With reference to the first aspect, in some implementations of the first aspect, the first electrical connector includes a conductive component. The SMA motor further includes a third electrical connection port.

The conductive component includes a first electrical connection region and a second electrical connection region, and there is the tight coupling relationship between the first electrical connection region and the second electrical connection region. The first end of the first SMA wire is electrically connected to the first electrical connection port by using the first electrical connection region and the second electrical connection region. A first end of the second SMA wire is electrically connected to the first electrical connection port by using the second electrical connection region.

The third electrical connection port is electrically connected to a second end of the second SMA wire by using a third electrical connector.

In an example, the first SMA wire may be, for example, SMA 611 in the following specific embodiments, and the second SMA wire may be, for example SMA 612 or SMA 614 in the following specific embodiments.

In another example, the first SMA wire may be, for example, SMA 614 in the following specific embodiments, and the second SMA wire may be, for example, SMA 611 or SMA 613 in the following specific embodiments.

In this application, the first SMA wire and the second SMA wire share the first electrical connector, and the first electrical connector may have a tight coupling relationship with the first electrical connector. This helps reduce an interference magnetic field generated by the SMA motor, and helps reduce a quantity of electrical connectors in the SMA motor, to facilitate miniaturization of the SMA motor. In other words, the second SMA wire and the first SMA wire share the conductive component and the first electrical connection port. This helps reduce a quantity of electrical connection ports and a quantity of electrical connectors in the SMA motor, and improve integration of the SMA motor.

With reference to the first aspect, in some implementations of the first aspect, the second electrical connection region is electrically connected between the first electrical connection port and the first electrical connection region. The first electrical connection region and the second electrical connection region are disposed opposite to and spaced from each other in a horizontal direction of the second electrical connection region, and a maximum spacing distance between the first electrical connection region and the second electrical connection region in the horizontal direction is less than the preset threshold, so that when the conductive component is driven, the first electrical connection region and the second electrical connection region form the tight coupling relationship.

In an example, a "vertical direction" of a component C may be, for example, an extension direction of the component C. The concept of "vertical direction" may be used for, for example, a rod, a line, an arm, a stick, a column, or another component with a distinct extension direction. The "horizontal direction" of the component C may correspond to the "vertical direction" of the component C. The "horizontal" direction of the component C may be, for example, any direction vertically disposed relative to the "vertical direction" of the component C.

That a component D and the component C are spaced from each other in the horizontal direction of the component C may mean that the component D and the component C are disposed opposite to each other in the horizontal direction of the component C, and there is a spacing between the component D and the component C. A spacing distance between the components D and C in the horizontal direction of the component C, a straight line that is disposed in parallel relative to the horizontal direction of the component C passes through a point c on the component C and a point d on component D, and a distance between the point c and the point d may be a spacing distance between the component D and the component C in the horizontal direction of the component C.

In this application, a placement manner of the first electrical connection region and the second electrical connection region is set, so that the conductive component forms a tight coupling relationship, to reduce an interference magnetic field generated by the SMA motor

In addition, due to the tight coupling relationship of the conductive component, a tight coupling relationship is simply and flexibly formed between the second electrical connector and the conductive component in the SMA motor, and the third electrical connector and the conductive component in the SMA motor respectively.

With reference to the first aspect, in some implementations of the first aspect, the first electrical connection region includes a first end part and a second end part. The second end part is electrically connected between the second electrical connection region and the first end part. The first end part is mechanically connected to the first end of the first SMA wire. The first end part or the second end part is mechanically connected to the first end of the second SMA wire.

In this application, the first end part and the second end part are disposed on the first electrical connection region, and each end part may be configured to drive at least one SMA wire, to facilitate both tight coupling and integration of an SMA wire drive circuit.

With reference to the first aspect, in some implementations of the first aspect, the second electrical connector includes a first portion. The first portion of the second electrical connector is mechanically connected to the second end of the first SMA wire, and a maximum spacing distance between the first portion of the second electrical connector and the first SMA wire is less than the preset threshold, so that when the first SMA wire is driven, the first portion of the second electrical connector and the first SMA wire form the tight coupling relationship.

In an example, the first SMA wire may be, for example, SMA 611 in the following specific embodiments, and the second SMA wire may be, for example, SMA 612 or SMA 614 in the following specific embodiments.

In this application, a placement manner of the second electrical connector, an electrical connection relationship between the second electrical connector and another conductive component, and the like are set, so that the second electrical connector and the first SMA wire form a tight coupling relationship, and a tight coupling relationship between a plurality of conductive components associated with the first SMA wire is strengthened, to help reduce an interference magnetic field generated by the SMA motor.

With reference to the first aspect, in some implementations of the first aspect, any two of the second electrical connection region, the second SMA wire, and the third electrical connector have the tight coupling relationship.

In this application, a placement manner of the second electrical connection region, the second SMA wire, and the third electrical connector is set, so that a tight coupling relationship between a plurality of conductive components associated with the second SMA wire is strengthened, to reduce an interference magnetic field generated by the SMA motor.

With reference to the first aspect, in some implementations of the first aspect, the second electrical connection region includes a first segment, and a maximum spacing distance between the first segment and the second SMA wire is less than the preset threshold, so that when the second SMA wire is driven, the first segment and the second SMA wire form the tight coupling relationship.

The first segment may be, for example, a second spring plate arm segment of a first spring plate arm, or a second extension arm segment of a first extension segment of a first conductive sheet.

In an example, the second SMA wire may be, for example, SMA 612 in the following specific embodiments.

In this application, the first electrical connector and the second SMA wire are disposed to form a tight coupling relationship, so that the tight coupling relationship between the plurality of conductive components associated with the second SMA wire is strengthened, to help significantly reduce an interference magnetic field generated by a conductive component in the SMA motor.

In addition, the first electrical connector and the second SMA wire form a tight coupling relationship, so that when a plurality of SMA wires share the first electrical connector, the first electrical connector has a tight coupling relationship with a plurality of conductive components in the SMA motor, to facilitate tight coupling and integration of an SMA wire drive circuit.

With reference to the first aspect, in some implementations of the first aspect, the third electrical connector includes a first portion, and the first portion of the third electrical connector is mechanically connected to the second end of the second SMA wire. The second electrical connection region further includes a second segment, and a maximum spacing distance between the first portion of the third electrical connector and the second segment of the second electrical connection region is less than the preset threshold, so that when the second SMA wire is driven, the first portion of the third electrical connector and the second segment of the second electrical connection region form the tight coupling relationship.

In an example, the second SMA wire may be, for example, SMA 612 in the following specific embodiments.

The second segment may be, for example, a first spring plate arm segment of the first spring plate arm, or a first extension arm segment of the first extension segment of the first conductive sheet.

In this application, the first electrical connector and the third electrical connector are disposed to form a tight coupling relationship, so that the tight coupling relationship between the plurality of conductive components associated with the second SMA wire is strengthened, to help significantly reduce an interference magnetic field generated by a conductive component in the SMA motor.

In addition, the first electrical connector may have a tight coupling relationship with a plurality of conductive components in the SMA motor, to facilitate tight coupling and integration of the SMA wire drive circuit.

With reference to the first aspect, in some implementations of the first aspect, the third electrical connector includes a first portion, and the first portion of the third electrical connector is mechanically connected to the second end of the second SMA wire. A maximum spacing distance between the second SMA wire and the first portion of the third electrical connector is less than the preset threshold, so that when the second SMA wire is driven, the first portion of the third electrical connector and the second SMA wire form the tight coupling relationship.

In an example, the second SMA wire may be, for example, SMA 614 in the following specific embodiments.

In this application, the second SMA wire and the third electrical connector are disposed to form a tight coupling relationship, so that the tight coupling relationship between the plurality of conductive components associated with the second SMA wire is strengthened, to help significantly reduce an interference magnetic field generated by a conductive component in the SMA motor.

With reference to the first aspect, in some implementations of the first aspect, a first end of the third SMA wire is electrically connected to the first electrical connection port by using the second electrical connection region. The SMA motor further includes: a fourth electrical connection port, where the fourth electrical connection port is electrically connected to a second end of the third SMA wire by using a fourth electrical connector.

In an example, the first SMA wire may be, for example, SMA 611 in the following specific embodiments, and the third SMA wire may be, for example, SMA 613 in the following specific embodiments.

In another example, the first SMA wire may be, for example, SMA 614 in the following specific embodiments, and the third SMA wire may be, for example, SMA 612 in the following specific embodiments.

In this application, the first SMA wire, the second SMA wire, and the third SMA wire share the first electrical connector. This helps reduce a quantity of electrical connectors in the SMA motor, and further facilitates miniaturization of the SMA motor.

With reference to the first aspect, in some implementations of the first aspect, the fourth electrical connector has the tight coupling relationship with at least one of the third SMA wire and the second electrical connection region.

In this application, a plurality of conductive components associated with the third SMA wire are disposed to form a tight coupling relationship, to help reduce an interference magnetic field generated by the SMA motor, and facilitate tight coupling and integration of an SMA wire drive circuit.

With reference to the first aspect, in some implementations of the first aspect, the fourth electrical connector includes a first portion and a second portion. The first portion of the fourth electrical connector is electrically connected between the fourth electrical connection port and the second portion of the fourth electrical connector, and the second portion of the fourth electrical connector is mechanically connected to the second end of the third SMA wire. A maximum spacing distance between the first portion of the fourth electrical connector and the second electrical connection region is less than the preset threshold, and a maximum spacing distance between the second portion of the fourth electrical connector and the third SMA wire is less than the preset threshold, so that when the second SMA wire is driven, the first portion of the fourth electrical connector and the second electrical connection region form the tight coupling relationship, and the second portion of the fourth electrical connector and the third SMA wire form the tight coupling relationship.

In an example, the third SMA wire may be, for example, SMA 613 in the following specific embodiments.

In this application, a placement manner of the fourth electrical connector is set, so that the tight coupling relationship is formed between the plurality of conductive components associated with the third SMA wire, to help significantly reduce an interference magnetic field generated by the SMA motor.

With reference to the first aspect, in some implementations of the first aspect, a first end of the fourth SMA wire is electrically connected to the first electrical connection port by using the first electrical connection region and the second electrical connection region. The SMA motor further includes a fifth electrical connection port.

The fifth electrical connection port is electrically connected to a second end of the fourth SMA wire by using a fifth electrical connector. The fifth electrical connector includes a first portion, the first portion of the fifth electrical connection port is mechanically connected to the second end of the fourth SMA wire, and a maximum spacing distance between the first portion of the fifth electrical connector and the fourth SMA wire is less than the preset threshold, so that when the fourth SMA wire is driven, the first portion of the fifth electrical connector and the fourth SMA wire form the tight coupling relationship.

In an example, the fourth SMA wire may be, for example, SMA 614 in the following specific embodiments.

In this application, the first SMA wire, the second SMA wire, the third SMA wire, and the fourth SMA wire share the first electrical connector. This helps reduce a quantity of electrical connectors in the SMA motor, and further facilitates miniaturization of the SMA motor

In addition, a plurality of conductive components associated with the fourth SMA wire are disposed to form a tight coupling relationship, to help reduce an interference magnetic field generated by the SMA motor, and facilitate tight coupling and integration of an SMA wire drive circuit.

With reference to the first aspect, in some implementations of the first aspect, the first electrical connector includes a conductive component. The SMA motor further includes a third electrical connection port.

The conductive component includes a second electrical connection region, the first SMA wire is electrically connected to the first electrical connection port by using the second electrical connection region, and a first end of the second SMA wire is electrically connected to the first electrical connection port by using the second electrical connection region.

The third electrical connection port is electrically connected to a second end of the second SMA wire by using a third electrical connector. The first SMA wire and the second electrical connection region have the tight coupling relationship, and the second SMA wire and the third electrical connector have the tight coupling relationship.

In an example, the first SMA wire may be, for example, SMA 612 in the following specific embodiments, and the second SMA wire may be, for example, SMA 613 in the following specific embodiments.

In an example, the first SMA wire may be, for example, SMA 613 in the following specific embodiments, and the second SMA wire may be, for example, SMA 614 in the following specific embodiments.

In this application, the first SMA wire and the second SMA wire share the first electrical connector, there may be the tight coupling relationship between the plurality of conductive components associated with the first SMA wire, and there may be the tight coupling relationship between the plurality of conductive components associated with the second SMA wire. This helps reduce an interference magnetic field generated by the SMA motor, and helps reduce a quantity of electrical connectors in the SMA motor, to facilitate miniaturization of the SMA motor.

With reference to the first aspect, in some implementations of the first aspect, the conductive component includes a second end part, the second electrical connection region is electrically connected between the first electrical connection port and the second end part, and the first end of the first SMA wire is mechanically connected to the second end part.

The second electrical connection region includes a first segment, and a maximum spacing distance between the first SMA wire and the first segment of the second electrical connection region is less than the preset threshold, so that when the first SMA wire is driven, the first SMA wire and the first segment of the second electrical connection region form the tight coupling relationship.

In an example, the first SMA wire may be, for example, SMA 612 in the following specific embodiments, and the second SMA wire may be, for example, SMA 613 in the following specific embodiments.

In this application, the first electrical connector and the first SMA wire are disposed to form a tight coupling relationship, so that the tight coupling relationship between the plurality of conductive components associated with the first SMA wire is strengthened, to help significantly reduce an interference magnetic field generated by a conductive component in the SMA motor.

With reference to the first aspect, in some implementations of the first aspect, the second electrical connector includes a first portion, and the first portion of the second electrical connector is mechanically connected to the second end of the first SMA wire. The second electrical connection region further includes a second segment, and a maximum spacing distance between the first portion of the second electrical connector and the second segment of the second electrical connection region is less than the preset threshold, so that when the first SMA wire is driven, the first portion of the second electrical connector and the second segment of the second electrical connection region form the tight coupling relationship.

In this application, the first electrical connector and the second electrical connector are disposed to form a tight coupling relationship, so that the tight coupling relationship between the plurality of conductive components associated with the first SMA wire is strengthened, to help significantly reduce an interference magnetic field generated by a conductive component in the SMA motor.

With reference to the first aspect, in some implementations of the first aspect, the third electrical connector includes a first portion and a second portion. The first portion of the third electrical connector is electrically connected between the third electrical connection port and the second portion of the third electrical connector, the second portion of the third electrical connector is mechanically connected to the second end of the second SMA wire, a maximum spacing distance between the first portion of the third electrical connector and the second electrical connection region is less than the preset threshold, and a maximum spacing distance between the second portion of the third electrical connector and the second SMA wire is less than the preset threshold, so that when the second SMA wire is driven, the first portion of the third electrical connector and the second electrical connection region form the tight coupling relationship, and the second portion of the third electrical connector and the second SMA wire form the tight coupling relationship.

In this application, a placement manner of the third electrical connector is disposed, so that the tight coupling relationship is formed between the plurality of conductive components associated with the second SMA wire, to help significantly reduce an interference magnetic field generated by the SMA motor.

Optionally, the first electrical connector includes a conductive component. The conductive component includes a first electrical connection region, and a second electrical connection region. The first electrical connection region includes a first end part and a second end part, the second electrical connection region is mechanically connected between the first end part and the second part, and a maximum spacing distance between the first electrical connection region and the second electrical connection region is less than the preset threshold, so that when the conductive component is driven, the first electrical connection region and the second electrical connection region form the tight coupling relationship. The first end of the first SMA wire is mechanically connected to the first end part, the second electrical connection region includes a second segment, the first SMA wire and the second segment are spaced from each other, and a spacing distance between the first SMA wire and the second segment is less than the preset threshold, so that when the first SMA wire is driven, the first SMA wire and the second segment of the second electrical connection region form the tight coupling relationship. The second electrical connector includes a first portion, the first portion of the second electrical connector is mechanically connected to the second end of the first SMA wire, and a maximum spacing distance between the first portion of the second electrical connector and the first SMA wire or the second segment of the conductive component is less than the preset threshold, so that when the first SMA wire is driven, the first portion of the second electrical connector and the first SMA wire or the second segment of the conductive component form the tight coupling relationship.

The first SMA wire and the second segment are spaced from each other. For example, the first SMA wire may be disposed in parallel relative to the second segment.

Optionally, the first electrical connector includes a conductive component. The conductive component includes a first electrical connection region, and a second electrical connection region. The first electrical connection region includes a first end part and a second end part, the second electrical connection region is mechanically connected between the first end part and the second part, and a maximum spacing distance between the first electrical connection region and the second electrical connection region is less than the preset threshold, so that when the conductive component is driven, the first electrical connection region and the second electrical connection region form the tight coupling relationship. A first end of the second SMA wire is mechanically connected to the second end part, and the first end of the second SMA wire is electrically connected to the first electrical connection port. The second electrical connection region includes a first segment and a second segment, the second SMA wire and the first segment are spaced from each other, and a spacing distance between the second SMA wire and the first segment is less than the preset threshold, so that when the first SMA wire is driven, the first SMA wire and the first segment of the second electrical connection region form the tight coupling relationship. The SMA motor further includes a third electrical connection port, where the third electrical connection port is electrically connected to a second end of the second SMA wire by using a third electrical connector, the third electrical connector includes a first portion, the first portion of the third electrical connector is mechanically connected to the second end of the second SMA wire, and a maximum spacing distance between the first portion of the third electrical connector and the second segment of the second electrical connection region is less than the preset threshold, so that when the second SMA wire is driven, the first portion of the third electrical connector and the second segment of the second electrical connection region form the tight coupling relationship.

The second SMA wire and the first segment are spaced from each other. For example, the second SMA wire may be disposed in parallel relative to the first segment.

Optionally, the first electrical connector includes a conductive component, the conductive component includes a first electrical connection region and a second electrical connection region, the first electrical connection region includes a first end part and a second end part, the second electrical connection region is mechanically connected between the first end part and the second end part, and a maximum spacing distance between the first electrical connection region and the second electrical connection region is less than the preset threshold, so that when the conductive component is driven, the first electrical connection region and the second electrical connection region form the tight coupling relationship. A first end of the third SMA wire is mechanically connected to the second end part, and the first end of the third SMA wire is electrically connected to the first electrical connection port. The SMA motor further includes: a fourth electrical connection port, where the fourth electrical connection port is electrically connected to a second end of the third SMA wire by using a fourth electrical connector, the fourth electrical connector includes a first portion and a second portion, the first portion of the fourth electrical connector is electrically connected between the fourth electrical connection port and the second portion of the fourth electrical connector, the second portion of the fourth electrical connector is mechanically connected to the second end of the third SMA wire, a maximum spacing distance between the first portion of the fourth electrical connector and the second electrical connection region is less than the preset threshold, and a maximum spacing distance between the second portion of the fourth electrical connector and the third SMA wire is less than the preset threshold, so that when the third SMA wire is driven, the first portion of the fourth electrical connector and the second electrical connection region form the tight coupling relationship, and the second portion of the fourth electrical connector and the third SMA wire form the tight coupling relationship.

Optionally, the first electrical connector includes a conductive component, the conductive component includes a first electrical connection region and a second electrical connection region, the first electrical connection region includes a first end part and a second end part, the second electrical connection region is mechanically connected between the first end part and the second end part, and a maximum spacing distance between the first electrical connection region and the second electrical connection region is less than a preset threshold, so that when the conductive component is driven, the first electrical connection region and the second electrical connection region form the tight coupling relationship. A first end of the fourth SMA wire is mechanically connected to the first end part, and the first end of the fourth SMA wire is electrically connected to the first electrical connection port. The SMA motor further includes a fifth electrical connection port, where the fifth electrical connection port is electrically connected to a second end of the fourth SMA wire by using a fifth electrical connector, the fifth electrical connector includes a first portion, the first portion of the fifth electrical connector is mechanically connected to the second end of the fourth SMA wire, and a maximum spacing distance between the first portion of the fifth electrical connector and the fourth SMA wire is less than the preset threshold, so that when the third SMA wire is driven, the first portion of the fifth electrical connector and the fourth SMA wire form the tight coupling relationship.

With reference to the first aspect, in some implementations of the first aspect, the first electrical connector further includes a common electrical connector.

The common electrical connector is electrically connected between the first electrical connection port and the second electrical connection region, and the common electrical connector has the tight coupling relationship with at least one of the second electrical connector and the third electrical connector.

In this application, the common electrical connector is disposed to form the tight coupling relationship with the plurality of conductive components in the SMA motor, to help significantly reduce an interference magnetic field generated by the SMA motor.

With reference to the first aspect, in some implementations of the first aspect, the second electrical connector includes a second portion, the second portion of the second electrical connector is mechanically connected to the second electrical connection port, and a maximum spacing distance between the second portion of the second electrical connector and the common electrical connector is less than the preset threshold, so that when the common electrical connector is driven, the second portion of the second electrical connector and the common electrical connector form the tight coupling relationship.

In this application, a placement manner of the common electrical connector is set, so that the tight coupling relationship is formed between the first electrical connector and the plurality of conductive components in the SMA motor, to help significantly reduce an interference magnetic field generated by the SMA motor

With reference to the first aspect, in some implementations of the first aspect, the first electrical connection port, the second electrical connection port, and the third electrical connection port are located on a same side of the SMA motor.

In an example, the first electrical connection port, the second electrical connection port, the third electrical connection port, and an open end of the first spring plate arm are located on a same side of the SMA motor.

In this application, the plurality of electrical connection ports are disposed on a same side of the SMA motor, to reduce a length of an electrical connection line of the SMA motor

With reference to the first aspect, in some implementations of the first aspect, the conductive component is the spring plate, the first electrical connection region is a partial region that is of the spring plate body and that is close to the first spring plate arm, and the second electrical connection region is the first spring plate arm.

In this application, the SMA wire is driven by using the spring plate, to help improve integration of the SMA motor.

With reference to the first aspect, in some implementations of the first aspect, the spring plate body further includes a spring plate through hole and a first slit, and the first slit communicates with the spring plate through hole, so that a region, other than the first electrical connection region, of the spring plate body is open.

In this application, an electrical connection path on the spring plate can be limited through the first slit, to help reduce an interference magnetic field generated by the SMA motor.

With reference to the first aspect, in some implementations of the first aspect, the conductive component is the spring plate, the first electrical connection region is a partial region that is of the spring plate body and that is close to the first spring plate arm, the second electrical connection region is the first spring plate arm, the first segment is a second spring plate arm segment of the first spring plate arm, and the spring plate meets L<L/, where Lis a length of the second spring plate arm segment, and L is a width of the spring plate in a length direction of the second spring plate arm segment.

In this application, a structure of the spring plate is limited, so that an electrical connection path on the spring plate can be planned, to help reduce an interference magnetic field generated by the SMA motor. In addition, because the spring plate does not have a slit, mechanical stability of the spring plate can be improved.

With reference to the first aspect, in some implementations of the first aspect, the conductive component is a first conductive sheet. The first conductive sheet includes a first extension arm and a second extension arm, the first electrical connection region is the second extension arm, and the second electrical connection region is the first extension arm.

In this application, the first conductive sheet is disposed in the SMA motor, so that an electrical connection path in the SMA motor is planned, and mechanical stability of the spring plate is improved.

With reference to the first aspect, in some implementations of the first aspect, the first conductive sheet is a flexible printed circuit FPC.

In this application, the flexible printed circuit FPC can help flexibly plan an electrical connection path in the SMA motor.

With reference to the first aspect, in some implementations of the first aspect, the first electrical connector has the tight coupling relationship with the first SMA wire. The SMA motor further includes a third electrical connection port and a fourth electrical connection port.

The third electrical connection port is electrically connected to a first end of the second SMA wire by using a third electrical connector, the first end of the second SMA wire is adjacent to the second end of the first SMA wire, and a spacing between the third electrical connection port and the second electrical connection port is less than the first preset spacing.

The fourth electrical connection port is electrically connected to a second end of the second SMA wire by using a fourth electrical connector, the fourth electrical connector and the second SMA wire have the tight coupling relationship, and a spacing between the third electrical connection port and the fourth electrical connection port is less than the first preset spacing.

In this application, four electrical connection ports corresponding to two adjacent SMA wires are disposed near an intersection of the two SMA wires, and a plurality of SMA wires and a plurality of electrical connectors are compactly arranged, to help reduce an interference magnetic field generated by the SMA motor.

In addition, the electrical connection port and the electrical connector may be compactly disposed in the SMA motor, to help improve integration of the SMA motor.

With reference to the first aspect, in some implementations of the first aspect, the first spring plate arm further includes a plurality of bent portions, and a minimum spacing between two adjacent bent portions is greater than a second preset spacing.

In this application, elastic performance of the spring plate can be improved by using the plurality of bent portions.

With reference to the first aspect, in some implementations of the first aspect, the SMA motor further includes a first support and a second support, one electrical connector of the SMA motor is disposed on the first support, and the other electrical connector of the SMA motor is disposed on the second support.

In this application, the electrical connector is disposed at different heights of the SMA motor, so that an electrical connection path in the SMA motor can be flexibly planned.

With reference to the first aspect, in some implementations of the first aspect, one electrical connector of the SMA motor is an electrical connection line or a conductive sheet.

In this application, the electrical connection line is used as the electrical connector, so that an electrical connection path in the SMA motor is flexibly planned. The conductive sheet is used as the electrical connector, so that mechanical stability of the SMA motor is improved.

According to a second aspect, a motor module is provided, including: a lens array and the SMA motor according to any one of the possible implementations of the first aspect, where one end of the SMA wire is connected to the lens array, and the other end of the SMA wire is fastened in the motor module.

In this application, the first electrical connector and conductive components (including a first electrical connector and a conductive component, other than the first electrical connector, in the motor module) in the motor module are disposed to form a tight coupling relationship. This helps reduce an interference magnetic field generated by the SMA motor, and helps reduce a magnetic interference degree of the motor module to a magnetic sensitive electronic component, to facilitate normal operation of the magnetic sensitive electronic component. In this application, the SMA motor may control the lens array by controlling a first SMA wire, a second SMA wire, a third SMA wire, and a fourth SMA wire, so that movement accuracy of the lens array is improved, and a high-quality shot image is obtained.

According to a third aspect, a camera module is provided, including a lens array, a circuit board, and the SMA motor according to any one of the possible implementations of the first aspect.

One end of the SMA wire is connected to the lens array, and the other end of the SMA wire is fastened in the camera module.

A driver module is disposed on the circuit board, and the driver module is electrically connected to a first electrical connection port and a second electrical connection port.

In this application, a first electrical connector and conductive components (including the first electrical connector and a conductive component, other than the first electrical connector, in the camera module) in the camera module are disposed to form a tight coupling relationship. This helps reduce an interference magnetic field generated by the SMA motor, and helps reduce a magnetic interference degree of the SMA motor to a magnetic sensitive electronic component in the camera module, to facilitate normal operation of the magnetic sensitive electronic component. In this application, the SMA motor may control the lens array by controlling a first SMA wire, a second SMA wire, a third SMA wire, and a fourth SMA wire, so that movement accuracy of the lens array is improved, and a high-quality shot image is obtained.

According to a fourth aspect, an electronic device is provided, including the SMA motor according to any one of the possible implementations of the first aspect.

### BRIEF DESCRIPTION OF DRAWINGS

FIG. 1 is a schematic diagram of a structure of an electronic device;
FIG. 2 is a schematic diagram of a structure of a camera module;
FIG. 3 is an exploded view of a camera module;
FIG. 4 is a diagram of a driving principle of an SMA motor;
FIG. 5 is a schematic diagram of a structure of an electrical connection line of an SMA motor;
FIG. 6 is a schematic diagram of a structure of an SMA motor according to an embodiment of this application;
FIG. 7 is an exploded view of an SMA motor according to an embodiment of this application;
FIG. 8 is a schematic diagram of a structure of a bent portion according to an embodiment of this application;
FIG. 9 is a diagram of distribution of electrical connection ports according to an embodiment of this application;
FIG. 10 is a diagram of an electrical connection relationship of an SMA wire according to an embodiment of this application;
FIG. 11 is a diagram of an electrical connection relationship of an SMA wire according to an embodiment of this application;
FIG. 12 is a schematic diagram of a structure of a spring plate according to an embodiment of this application;
FIG. 13 is a schematic diagram of a position of a first slit according to an embodiment of this application;
FIG. 14 is a diagram of an electrical connection relationship of an SMA wire according to an embodiment of this application;
FIG. 15 is a diagram of an electrical connection relationship of an SMA wire according to an embodiment of this application;
FIG. 16 is a diagram of an electrical connection relationship of an SMA wire according to an embodiment of this application;
FIG. 17 is a diagram of an electrical connection relationship of an SMA wire according to an embodiment of this application;
FIG. 18 is a diagram of an electrical connection relationship of an SMA wire according to an embodiment of this application;
FIG. 19 is a diagram of an electrical connection relationship of an SMA wire according to an embodiment of this application;
FIG. 20 is a schematic diagram of a structure of an SMA motor having an image symmetry relationship according to an embodiment of this application;
FIG. 21 is a diagram of an optical image stabilization principle of an SMA motor according to an embodiment of this application;
FIG. 22 is a schematic diagram of structures of two electrical connection lines having a loose coupling characteristic and a tight coupling characteristic;
FIG. 23 is a schematic diagram of simulation of magnetic fields of two electrical connection lines having a loose coupling characteristic and a tight coupling characteristic;
FIG. 24 is a schematic diagram of simulation of magnetic fields of two electrical connection lines according to an embodiment of this application;
FIG. 25 is a schematic diagram of simulation of magnetic fields of four electrical connection lines according to an embodiment of this application;
FIG. 26 is a schematic diagram of a structure of an SMA motor according to an embodiment of this application;
FIG. 27 is a schematic diagram of a structure of a spring plate according to an embodiment of this application;
FIG. 28 is a schematic diagram of simulation of magnetic fields of four electrical connection lines according to an embodiment of this application;
FIG. 29 is a schematic diagram of a structure of an SMA motor according to an embodiment of this application;
FIG. 30 is an exploded view of an SMA motor according to an embodiment of this application;
FIG. 31 is a diagram of an electrical connection relationship of an SMA wire according to an embodiment of this application;
FIG. 32 is a diagram of an electrical connection relationship of an SMA wire according to an embodiment of this application;
FIG. 33 is a diagram of an electrical connection relationship of an SMA wire according to an embodiment of this application;
FIG. 34 is a diagram of an electrical connection relationship of an SMA wire according to an embodiment of this application;
FIG. 35 is a diagram of an electrical connection relationship of an SMA wire according to an embodiment of this application;
FIG. 36 is a diagram of an electrical connection relationship of an SMA wire according to an embodiment of this application;
FIG. 37 is a diagram of an electrical connection relationship of an SMA wire according to an embodiment of this application;
FIG. 38 is a diagram of an electrical connection relationship of an SMA wire according to an embodiment of this application;
FIG. 39 is a schematic diagram of a structure of an SMA motor having an image symmetry relationship according to an embodiment of this application;
FIG. 40 is a diagram of an electrical connection relationship of an SMA motor according to an embodiment of this application;
FIG. 41 is a schematic diagram of a structure of a spring plate according to an embodiment of this application;
FIG. 42 is a diagram of an electrical connection relationship of an SMA motor according to an embodiment of this application;
FIG. 43 is a diagram of an electrical connection relationship of an SMA motor according to an embodiment of this application;
FIG. 44 is a schematic diagram of a structure of an SMA motor according to an embodiment of this application;
FIG. 45 is a diagram of an electrical connection relationship of an SMA motor according to an embodiment of this application; and
FIG. 46 is a diagram of an electrical connection relationship of an SMA motor according to an embodiment of this application.

### DESCRIPTION OF EMBODIMENTS

The following describes technical solutions of this application with reference to accompanying drawings.

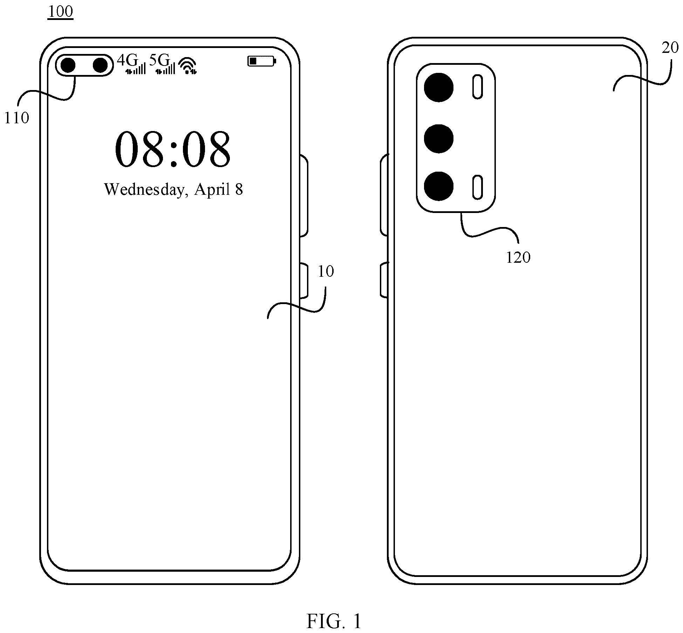

FIG. 1 is a schematic diagram of a structure of an electronic device 100. The electronic device 100 may be an electronic device with a camera or photographing function, for example, a mobile phone, a tablet computer, a television (or a smart screen), a laptop, a camera, a video recorder, or a camera. For ease of understanding, an example in which the electronic device 100 is a mobile phone is used for description in embodiments of this application.

The electronic device 100 may include a display 10 and a housing. The housing may include a bezel and a rear cover 20. The bezel may surround a periphery of the display 10, and the bezel may surround a periphery of the rear cover 20. There may be a specific spacing between the display 10 and the rear cover 20. The display 10 may be disposed in parallel relative to the rear cover 20.

A front-facing camera module (camera compact module, CCM) 110 may be disposed on the display 10 of the electronic device 100. As shown in the left figure in FIG. 1, the front-facing camera module 110 may be installed on the upper left part of the display 10. The front-facing camera module 110 may be, for example, configured to take a selfie.

A rear-facing camera module 120 may be disposed on the rear cover 20 of the electronic device 100. As shown in the right figure in FIG. 1, the rear-facing camera module 120 may be installed on the upper left part of the rear cover 20. The rear-facing camera module 120 may be configured to, for example, shoot a scene around the electronic device 100.

It should be understood that installation positions of the front-facing camera module 110 and the rear-facing camera module 120 shown in FIG. 1 are merely examples, and the installation positions of the camera modules may not be limited in this application. In some other embodiments, the front-facing camera module 110 and the rear-facing camera module 120 may alternatively be installed at other positions on the electronic device 100. For example, the front-facing camera module 110 may be installed on the middle upper part or right upper part of the display 10. For another example, the rear-facing camera module 120 may be installed on the middle upper part or right upper part of the rear cover 20. For another example, the front-facing camera module 110 or the rear-facing camera module 120 may be disposed on a movable component in the electronic device 100. By moving the movable component, the movable component may be hidden inside the electronic device 100, or may extend out of the electronic device 100.

It should be understood that a quantity of installed front-facing camera modules 110 and a quantity of installed rear-facing camera modules 120 shown in FIG. 1 are merely examples, and the quantity of installed camera modules may not be limited in this application. The electronic device 100 may include more or fewer camera modules.

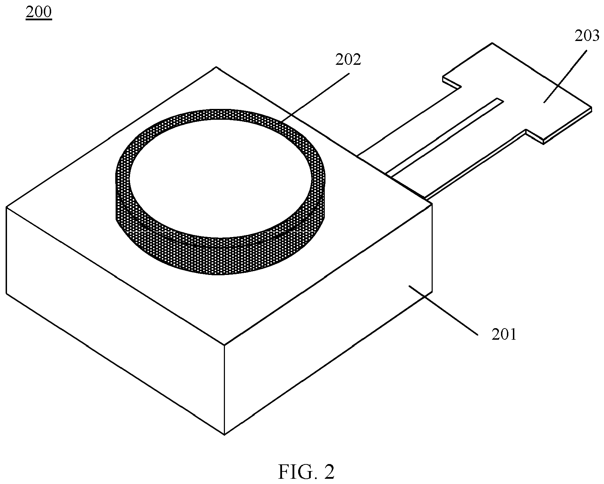

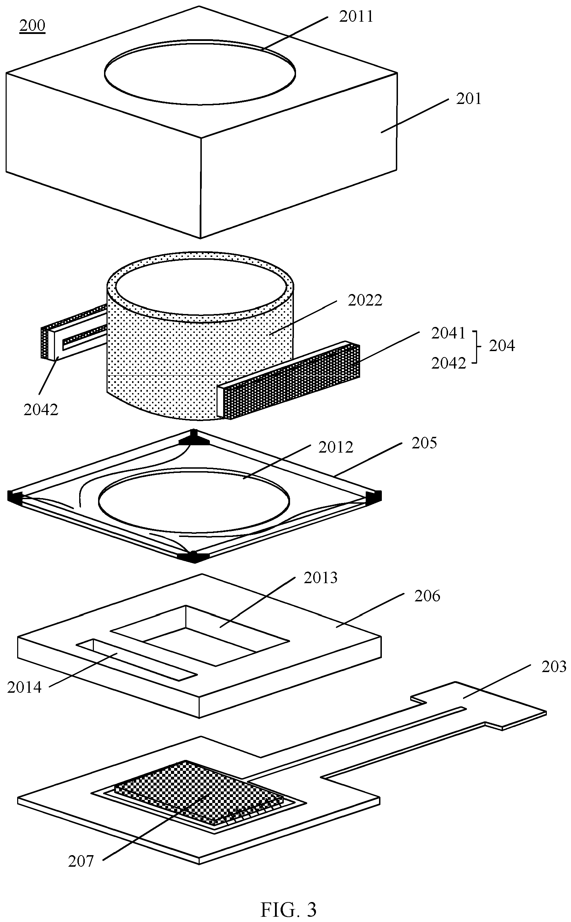

FIG. 2 is a schematic diagram of a structure of a camera module 200 according to an embodiment of this application. FIG. 3 is an exploded view of the camera module 200 shown in FIG. 2. The camera module 200 may be, for example, the front-facing camera module 110 or the rear-facing camera module 120 shown in FIG. 1. With reference to FIG. 2 and FIG. 3, it can be learned that the camera module 200 may include a camera housing 201, a motor module 202, a circuit board 203, an image sensor 207, and a holder 206. In an example, the motor module 202 may include a lens array 2022, a voice coil motor (voice coil motor, VCM) 204, a shape memory alloy (shape memory alloy, SMA) motor 205, and a housing (not shown in FIG. 2 and FIG. 3) configured to accommodate the lens array 2022, the voice coil motor 204, and the SMA motor 205.

The camera housing 201 may accommodate the voice coil motor 204, the SMA motor 205, the holder 206, the image sensor 207, and the like in the camera module 200. The lens array 2022 and the circuit board 203 may be at least partially located in the camera housing 201. The camera housing 201 may further include a through hole 2011 corresponding to the lens array 2022. In some examples, the lens array 2022 may be assembled on the through hole 2011.

The circuit board 203 may supply power to various electronic components (such as the voice coil motor 204, the SMA motor 205, and the image sensor 207) in the camera module 200 (for example, by using a driver module disposed on the circuit board 203). In addition, the circuit board 203 may further transmit a signal from an electronic component in the camera module 200 to the outside of the camera module 200. The image sensor 207 may be disposed on the circuit board 203. A center of the image sensor 207 may be aligned with an optical axis of the lens array 2022.

The lens array 2022 may project light from a periphery of the camera housing 201 to the image sensor 207. The lens array 2022 may move or rotate in the through hole 2011 of the camera housing 201 to implement a function such as auto focus (auto focus) and optical image stabilization (optical image stabilization, OIS).

Auto focus may mean that, by using a lens imaging principle and an optical reflection principle, light reflected by a photographed object may be imaged on the image sensor 207 after passing through the lens array 2022; and one or more lenses in the lens array 2022 are moved by using a motor based on an object distance of the photographed object, to form a clear image on the image sensor 207. Auto focus may be simply considered as a movement of the lens array 2022 or the lens along an optical axis.

The optical image stabilization may mean that, by adjusting a placement angle, a placement position, or the like of the lens array 2022, a phenomenon of instrument jitter occurring in a process of capturing an optical signal can be reduced, and imaging quality can be improved. In a possible method, a displacement or an angle to be compensated is detected by using, for example, a gyroscope, and then the lens array 2022 is driven by a motor to shift or rotate, so that image blur caused by jitter of an imaging instrument device during exposure can be compensated. The optical image stabilization may be simply considered as shifting or rotation of the lens array 2022 on a plane perpendicular to the optical axis.

The voice coil motor 204 may be configured to perform an auto focus function. As shown in FIG. 3, the voice coil motor 204 may include a magnet 2041 and a coil 2042. The magnet 2041 may be fastened in the camera housing 201 and is fixed relative to the camera housing 201, and the coil 2042 may be fastened on the lens array 2022. The circuit board 203 may supply power to the coil 2042. The powered-on coil 2042 may generate a magnetic field 1. The magnetic field 1 may interact with a magnetic field 2 generated by the magnet 2041, to generate an attractive force or repulsive force. Therefore, the coil 2042 may drive the lens array 2022 to move under an action of the attractive or repulsive force, to implement an auto focus function.

In some examples, in addition to the auto focus function, the voice coil motor 204 may further implement an optical image stabilization function. However, a user usually expects that a camera can implement a plurality of image shooting scenarios, for example, shooting a distant image, and shooting in a close-range scenario by using a wide aperture. Adjusting a quantity and/or shapes of lenses in the lens array 2022 helps implement an image shooting scenario. Therefore, to implement a plurality of image shooting scenarios and a high-quality shooting effect, a load or a size of the lens array 2022 gradually increases. When auto focus and optical image stabilization are implemented only by using the voice coil motor 204, a driving force of the voice coil motor 204 may be insufficient, which is not conducive to shooting a high-quality image. For example, the image may be blurred. If the driving force of the voice coil motor 204 is enhanced, a size of the voice coil motor 204 needs to be increased, which is not conducive to miniaturization of the camera module 200.

The camera module 200 shown in FIG. 3 further includes an SMA motor 205 configured to implement an auto focus function. In other words, the SMA motor 205 may be configured to supplement the driving force of the voice coil motor 204. The SMA motor 205 may be disposed vertically relative to an optical axis of the lens array 2022.

The SMA motor 205 may be disposed on the holder 206 in the camera module 200. For example, the holder 206 may be fastened on the circuit board 203 or the camera housing 201. The holder 206 may be located between the image sensor 207 and the SMA motor 205. This helps prevent the SMA motor 205 from being excessively close to the image sensor 207, and reduce magnetic field impact of the SMA motor 205 on the image sensor 207. In addition, the SMA motor 600 may be fastened, for example, on a side that is of the lens array 2022 and that is close to the image sensor 207.

The holder 206 may include a through hole 2013 corresponding to the image sensor 207, and a projection region of the holder 206 on the circuit board 203 may be located outside a projection region of the image sensor 207 on the circuit board 203. In this way, light from the lens array 2022 may pass through the through hole 2013 on the holder 206 to reach the image sensor 207.

The holder 206 may further include a through hole 2014. The through hole 2014 and a signal port of the SMA motor 205 may be located on a same side of the camera module 200. An electrical connector (for example, an electrical connection line) that is from the circuit board 203 and that passes through the through hole 2014 may be mechanically connected and/or electrically connected to the signal port of the SMA motor 205. The electrical connector may drive or feed the SMA motor 205 by the circuit board 203.

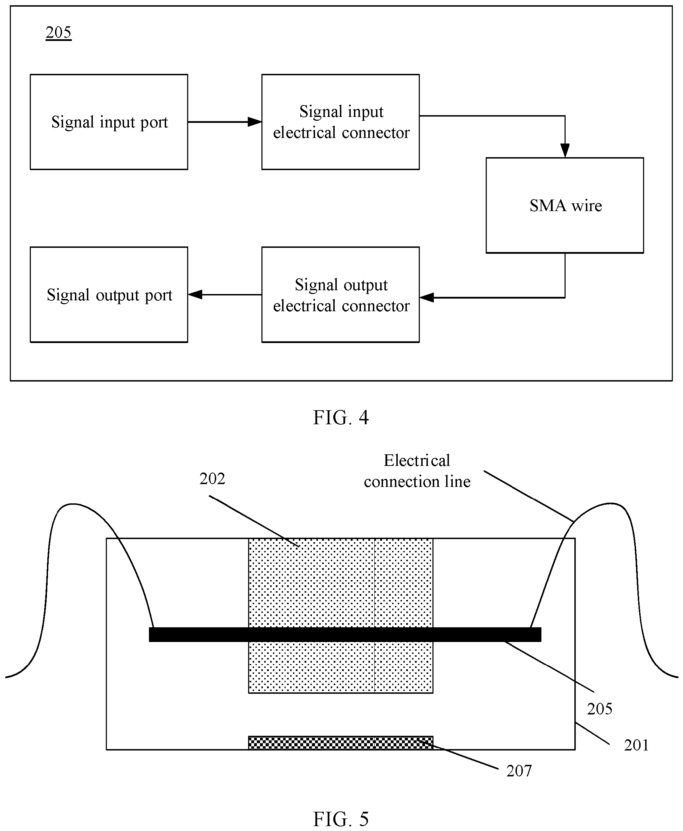

With reference to FIG. 3 and FIG. 4, the following describes a driving principle of the SMA motor 205. The SMA motor 205 may include, for example, a signal input port, a signal output port, a signal input electrical connector, a signal output electrical connector, and an SMA wire.

The signal input port and the signal output port may supply power to the SMA wire or provide an electrical signal. The signal input port may be electrically connected to a first end of the SMA wire by using the signal input electrical connector, and the signal output port may be electrically connected to a second end of the SMA wire by using the signal output electrical connector. A signal from the circuit board 203 may sequentially pass through the signal input port, the signal input electrical connector, the SMA wire, the signal output electrical connector, and the signal output port, and finally arrive at the circuit board 203, to form an electrical connection loop of the SMA motor. The SMA wire may be in a driven state when a current on the SMA wire is greater than a lowest working current (the lowest working current may be, for example, a lowest current that can cause the SMA wire to deform). When the current on the SMA wire is lower than the lowest operating current, the SMA wire may be in a state of not being driven.

One end of the SMA wire may be fastened relative to the camera housing 201, and the other end of the SMA wire may be fastened on the lens array 2022. When the SMA wire is powered on, the SMA wire may contract by heat, so that the SMA wire may drive the lens array 2022 to move relative to the camera housing 201. It can be learned that a material of the SMA wire may be a material having thermal contraction and cold expansion performance, for example, an alloy material including substances such as antimony, bismuth, and gallium.

When the SMA motor 205 includes a plurality of SMA wires, the SMA motor may include a plurality of signal ports, and the plurality of signal ports may supply power or provide electrical signals for the plurality of SMA wires.

In an example, the SMA motor may include a plurality of signal input ports and a plurality of signal output ports. The plurality of signal input ports may be in a one-to-one correspondence with a plurality of SMA wires (that is, any signal input port is electrically connected to only a corresponding SMA wire), and the plurality of signal output ports may be in a one-to-one correspondence with a plurality of SMA wires (that is, any signal output port is electrically connected to only a corresponding SMA wire).

In another example, the SMA motor may include one signal input port and a plurality of signal output ports. The signal input port may be electrically connected to each of the plurality of SMA wires, and the plurality of signal output ports may be in a one-to-one correspondence with the plurality of SMA wires (that is, any signal output port is electrically connected only to a corresponding SMA wire). The signal input port may be, for example, a common port (COM port).

In still another example, the SMA motor may include a plurality of signal input ports and one signal output port. The plurality of signal input ports may be in a one-to-one correspondence with a plurality of SMA wires (that is, any signal input port is electrically connected to only a corresponding SMA wire), and the signal output port may be electrically connected to each of the plurality of SMA wires. The signal output port may be, for example, a COM port.

With reference to FIG. 3 and FIG. 4, the circuit board 203 may provide a low-frequency alternating-current signal (for example, a pulse width modulation (pulse width modulation, PWM) signal) for the SMA motor 205, to reduce power consumption of the SMA motor 205, reduce resonance abnormal sound of the SMA motor 205, and help avoid overheating of the SMA motor 205. The low-frequency alternating-current signal is added to the electrical connection loop of the SMA motor, so that the SMA motor 205 may generate an interference magnetic field to affect normal operation of a magnetic sensitive component (such as the image sensor 207 and a power supply of the image sensor 207) in the camera module 200.

To reduce magnetic field interference to the magnetic sensitive component, as shown in FIG. 5, at least some electrical connection lines of the SMA motor 205 may be disposed outside the camera housing 201. This helps reduce magnetic field interference of the electrical connection line to the magnetic sensitive component (for example, the image sensor 207 in FIG. 5) in the camera module 200. However, the electrical connection line may cause magnetic field interference to another magnetic sensitive component outside the camera module 200. For example, the camera module 200 may be located near a radio frequency module. When the SMA motor 205 works normally, the electrical connection line may affect normal operation of the radio frequency module, for example, introduce electromagnetic noise.

In addition, because the SMA wire may move, rotate, deform, or the like in the camera module 200, a joint connecting a signal input/output electrical connector and the SMA wire may move along with the SMA wire, and the joint may fail due to frequent dragging, causing the SMA motor to fail to work normally.

In addition, disposing at least some electrical connection lines of the SMA motor outside the camera housing 201 is not conducive to full use of internal space of the camera module 200, and is not conducive to miniaturization and the like of the camera module 200.

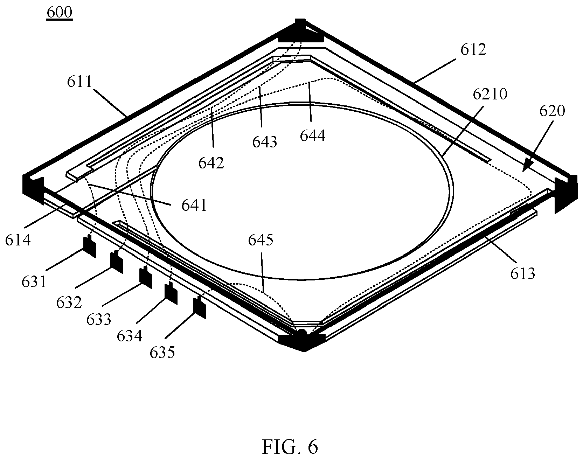

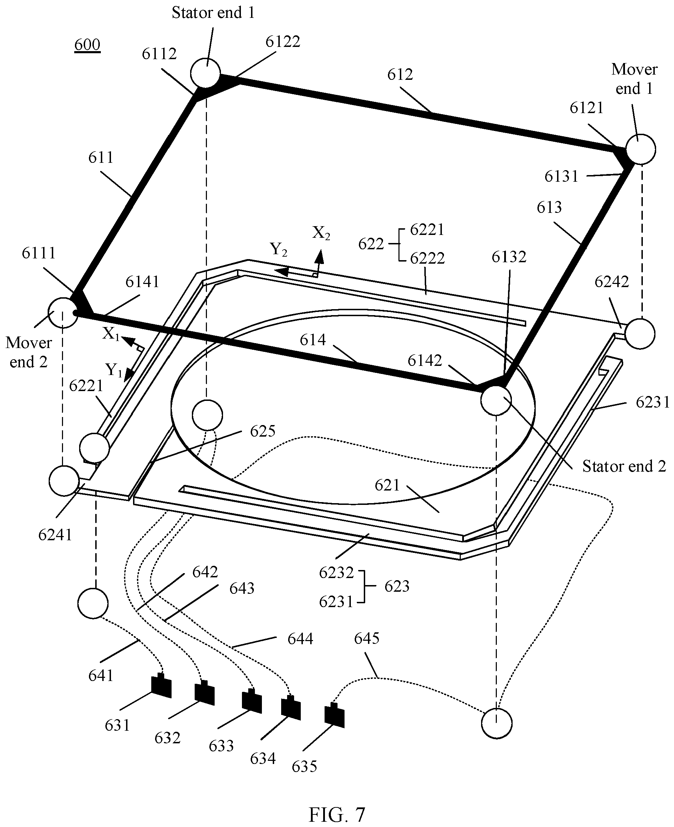

FIG. 6 is a schematic diagram of a structure of an SMA motor 600 according to an embodiment of this application. FIG. 7 is an exploded diagram of the SMA motor 600 shown in FIG. 6. With reference to FIG. 6 and FIG. 7, the following describes the SMA motor 600 provided in this application.

The SMA motor 600 may include an SMA wire 611, an SMA wire 612, an SMA wire 613, and an SMA wire 614 that are insulated from each other and adjacent to each other head to tail. In an example, the SMA wire 611 may be arranged in parallel relative to the SMA wire 613, the SMA wire 612 may be arranged in parallel relative to the SMA wire 614, and the SMA wire 611 may be arranged vertically relative to the SMA wire 612, and the SMA wire 614. The SMA wire 612 and the SMA wire 614 may be located between the SMA wire 611 and the SMA wire 613, and the SMA wire 612 and the SMA wire 614 may be located on both sides of the SMA wire 611, respectively. The SMA wire 611, the SMA wire 612, the SMA wire 613, and the SMA wire 614 may be approximately considered to be disposed on a same plane.

The SMA wire 611, the SMA wire 612, the SMA wire 613, and the SMA wire 614 may surround the lens array 2022 as shown in FIG. 2. As shown in FIG. 6 and FIG. 7, a tail end of the SMA wire 611 may be adjacent to a head end of the SMA wire 612, a tail end of the SMA wire 612 may be adjacent to a head end of the SMA wire 613, a tail end of the SMA wire 613 may be adjacent to a head end of the SMA wire 614, and a tail end of the SMA wire 614 may be adj acent to a head end of the SMA wire 611.

In other examples, the SMA motor may have a larger quantity of SMA wires. For example, the SMA motor further includes a SMA wire*, and a specific manner in which a plurality of SMA wires are adjacent to each other head to tail may be, for example: The tail end of the SMA wire 611 may be adjacent to the head end of the SMA wire 612, the tail end of the SMA wire 612 may be adjacent to the head end of the SMA wire 613, the tail end of the SMA wire 613 may be adjacent to the head end of the SMA wire 614, the tail end of the SMA wire 614 may be adjacent to the head end of the SMA wire*, and the tail end of the SMA wire* may be adjacent to the head end of the SMA wire 611.

As shown in FIG. 7, the SMA wire 611 may include a first end 6111 and a second end 6112. The first end 6111 of the SMA wire 611 may be mechanically connected to the lens array 202 as shown in FIG. 2. The second end 6112 of the SMA wire 611 may be fastened relative to the camera housing 201 as shown in FIG. 2. For example, the second end 6112 of the SMA wire 611 may be fastened to the holder 206 as shown in FIG. 2.

The SMA wire 612 may include a first end 6121 and a second end 6122. The first end 6121 of the SMA wire 612 may be mechanically connected to the lens array 202 as shown in FIG. 2. The second end 6122 of the SMA wire 612 may be fastened relative to the camera housing 201 as shown in FIG. 2. For example, the second end 6122 of the SMA wire 612 may be fastened to the holder 206 as shown in FIG. 2.

The SMA wire 613 may include a first end 6131 and a second end 6132. The first end 6131 of the SMA wire 613 may be mechanically connected to the lens array 202 as shown in FIG. 2. The second end 6132 of the SMA wire 613 may be fastened relative to the camera housing 201 as shown in FIG. 2. For example, the second end 6132 of the SMA wire 613 may be fastened to the holder 206 as shown in FIG. 2.

The SMA wire 614 may include a first end 6141 and a second end 6142. The first end 6141 of the SMA wire 614 may be mechanically connected to the lens array 202 as shown in FIG. 2. The second end 6142 of the SMA wire 614 may be fastened relative to the camera housing 201 as shown in FIG. 2. For example, the second end 6142 of the SMA wire 614 may be fastened to the holder 206 as shown in FIG. 2.

It can be learned from a position relationship among the SMA wire 611, the SMA wire 612, the SMA wire 613, and the SMA wire 614 that: The second end 6112 of the SMA wire 611 may be close to the second end 6122 of the SMA wire 612, to form a stator end 1 of the SMA motor 600. The first end 6121 of the SMA wire 612 may be close to the first end 6131 of the SMA wire 613, to form a mover end 1 of the SMA motor 600. The second end 6132 of the SMA wire 613 may be close to the second end 6142 of the SMA wire 614, to form a stator end 2 of the SMA motor 600. The first end 6111 of the SMA wire 611 may be close to the first end 6141 of the SMA wire 614, to form a mover end 2 of the SMA motor 600. In this application, the stator end may be understood as being fastened relative to the camera housing 201 shown in FIG. 2, and the mover end may be understood as being mechanically connected to the lens array 202.

The SMA motor 600 may further include a spring plate 620. The spring plate 620 is disposed in parallel relative to the SMA wire 611, the SMA wire 612, 613, and the SMA wire 614.

The spring plate 620 may include a spring plate body 621, a first spring plate arm 622, and a second spring plate arm 623. The spring plate body 621 may include a spring plate through hole 6210 (for example, may be the through hole 2012 shown in FIG. 2). The lens array 2022 shown in FIG. 2 may pass through the spring plate through hole 6210.

The first spring plate arm 622 may include a first spring plate arm segment 6221 and a second spring plate arm segment 6222. The second spring plate arm segment 6222 may be mechanically connected between the first spring plate arm segment 6221 and the spring plate body 621. That is, the first spring plate arm segment 6221 may be closer to an open end of the first spring plate arm 622, and the second spring plate arm segment 6222 may be closer to a tail end of the first spring plate arm 622.

The tail end of the spring plate arm may be, for example, a region in which the spring plate arm intersects with the spring plate body. The open end of the spring plate arm may be, for example, a farthest end of the spring plate arm extending outward from the spring plate body.

The first spring plate arm segment 6221 may be located near the SMA wire 611 (that is, a spacing between the first spring plate arm segment 6221 and the SMA wire 611 may be the smallest in comparison with a spacing between the first spring plate arm segment 6221 and another SMA wire), that is, the first spring plate arm segment 6221 and the SMA wire 611 are spaced from each other. In an example, the first spring plate arm segment 6221 is disposed in parallel relative to the SMA wire 611. This helps reduce occupied space of the first spring plate arm segment 6221 and the SMA wire 611.

In this embodiment of this application, that A and B are spaced from each other may mean that A and B are disposed opposite to and spaced from each other in a horizontal direction of A or B. In other words, A and B are disposed opposite to each other in a horizontal direction of A or B, and there is space between A and B. The spacing distance between A and B may be a spacing distance between A and B in the horizontal direction. Specifically, relative to a straight line that is disposed in parallel relative to the horizontal direction, the straight line may pass through a point a on A and a point b on B, and a distance between the point a and the point b may be the spacing distance between A and B in the horizontal direction.

A "vertical direction" of A may be, for example, an extension direction of A. The concept of "vertical direction" may be applied to, for example, a rod, a line, an arm, a stick, a column, or another component with a distinct extension direction. The "horizontal direction" of A may correspond to the "vertical direction" of A. The "horizontal direction" of A may be, for example, any direction vertically disposed relative to the "vertical direction" of A. For example, a vertical direction of the first spring plate arm segment 6221 may be a Yi direction shown in FIG. 7, and a horizontal direction of the first spring plate arm segment 6221 may be an X₁ direction shown in FIG. 7. A vertical direction of the second spring plate arm segment 6222 may be a Y₂ direction shown in FIG. 7. For example, a horizontal direction of the second spring plate arm segment 6222 may be an X₂ direction shown in FIG. 7.

The second spring plate arm segment 6222 may be located near the SMA wire 612, that is, the second spring plate arm segment 6222 and the SMA wire 612 are spaced from each other. In an example, the second spring plate arm segment 6222 is disposed in parallel relative to the SMA wire 612. The first spring plate arm segment 6221 and the second spring plate arm segment 6222 may be disposed perpendicular to each other.

As shown in FIG. 6 or FIG. 7, an open end of the first spring plate arm segment 6221 may be closer to the first end 6111 of the SMA wire 611 and the first end 6141 of the SMA wire 614. A part that is of the first spring plate arm segment 6221 and that is connected to the second spring plate arm segment 6222 may be closer to the second end 6112 of the SMA wire 611 and the second end 6122 of the SMA wire 612. A tail end of the second spring plate arm segment 6222 may be closer to the first end 6121 of the SMA wire 612 and the first end 6131 of the SMA wire 613.

The second spring plate arm 623 may include a third spring plate arm segment 6231 and a fourth spring plate arm segment 6232. The third spring plate arm segment 6231 and the fourth spring plate arm segment 6232 may be disposed perpendicular to each other. The fourth spring plate arm segment 6232 may be mechanically connected between the third spring plate arm segment 6231 and the spring plate body 621. That is, the third spring plate arm segment 6231 may be closer to an open end of the second spring plate arm 623, and the fourth spring plate arm segment 6232 may be closer to a tail end of the second spring plate arm 623.

The third spring plate arm segment 6231 may be located near the SMA wire 613. In an example, the third spring plate arm segment 6231 may be disposed in parallel relative to the SMA wire 613. The fourth spring plate arm segment 6232 may be located near the SMA wire 614. In an example, the fourth spring plate arm segment 6232 may be disposed in parallel relative to the SMA wire 614.

As shown in FIG. 6 or FIG. 7, an open end of the third spring plate arm segment 6231 may be closer to the first end 6121 of the SMA wire 612 and the first end 6131 of the SMA wire 613. A part that is of the third spring plate arm segment 6231 and that is connected to the fourth spring plate arm segment 6232 may be closer to the second end 6132 of the SMA wire 613 and the second end 6142 of the SMA wire 614. A tail end of the fourth spring plate arm segment 6232 may be closer to the first end 6141 of the SMA wire 614 and the first end 6111 of the SMA wire 611.

The spring plate body 621 may include a first end part 6241 and a second end part 6242. The first end part 6241 may be located between the first spring plate arm segment 6221 and the fourth spring plate arm segment 6232 (that is, located near the first end 6111 of the SMA wire 611 and the first end 6141 of the SMA wire 614). The second end part 6242 may be located between the second spring plate arm segment 6222 and the third spring plate arm segment 6231 (that is, located near the first end 6121 of the SMA wire 612 and the first end 6131 of the SMA wire 613).

In the examples shown in FIG. 6 and FIG. 7, the spring plate 620 may transmit an electrical signal for an SMA wire. That is, the spring plate 620 may be a conductive component. The spring plate body 621 may include a conducted first electrical connection region, the first spring plate arm 622 may be a second electrical connection region, and the first spring plate arm 622 may be mechanically connected between an electrical connector and the spring plate body 621. Specifically, the first end part 6241 is connected to the first spring plate arm segment 6221, the second end part 6242 is connected to the first spring plate arm segment 6221, and the second end part 6242 is electrically connected between the first spring plate arm 622 and the first end part 6241. That is, in addition to providing resistance and a restoring force for deformation of the SMA wire, the spring plate 620 may further transmit an electrical signal for the SMA wire.

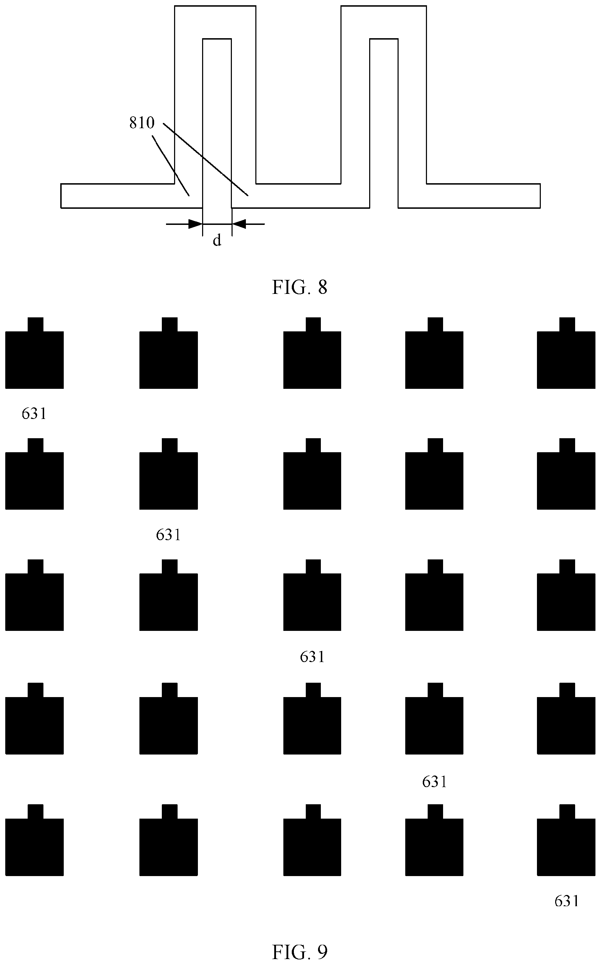

As shown in FIG. 6 or FIG. 7, the first spring plate arm segment 6221, the second spring plate arm segment 6222, the third spring plate arm segment 6231, and the fourth spring plate arm segment 6232 may all be in a long strip shape. In order to improve elastic performance of the first spring plate arm 622 and the second spring plate arm 623, the first spring plate arm 622 and the second spring plate arm 623 each may include a plurality of bent portion 810, as shown in FIG. 8. In another example, an entirety formed by the plurality of bent portions 810 may be in a spiral shape. To reserve a compression amount of the spring plate arm, a minimum spacing d between two adjacent bent portions 810 may be greater than a second preset spacing (for example, 2 mm).

The SMA motor 600 may further include an electrical connection port 631, an electrical connection port 632, an electrical connection port 633, an electrical connection port 634, and an electrical connection port 635. The electrical connection port 631 is an electrical connection port shared by the SMA wire 611, the SMA wire 612, the SMA wire 613, and the SMA wire 614. The electrical connection port 632, the electrical connection port 633, the electrical connection port 634, and the electrical connection port 635 respectively correspond to the SMA wire 611, the SMA wire 612, the SMA wire 613, and the SMA wire 614. As shown in FIG. 6 or FIG. 7, the electrical connection port 631, the electrical connection port 632, the electrical connection port 633, the electrical connection port 634, and the electrical connection port 635 may be located on a same side of the SMA motor 600 as the SMA wire 614. A distance between two adjacent electrical connection ports may be less than a first preset spacing.

FIG. 9 shows a plurality of positions of the electrical connection port 631 relative to other electrical connection ports. It may be learned that the electrical connection port 631 may be located between any two electrical connection ports of the electrical connection port 632, the electrical connection port 633, the electrical connection port 634, and the electrical connection port 635. It should be understood that a specific position of the electrical connection port 631 may not be limited in this embodiment of this application.

The SMA motor 600 may further include a common electrical connection line 641, an electrical connection line 642, an electrical connection line 643, an electrical connection line 644, and an electrical connection line 645. In this application, the electrical connection line may be an electrical connector that can be conducted. The common electrical connection line 641 is an electrical connection line shared by the SMA wire 611, the SMA wire 612, the SMA wire 613, and the SMA wire 614. The electrical connection line 642, the electrical connection line 643, the electrical connection line 644, and the electrical connection line 645 respectively correspond to the SMA wire 611, the SMA wire 612, the SMA wire 613, and the SMA wire 614.

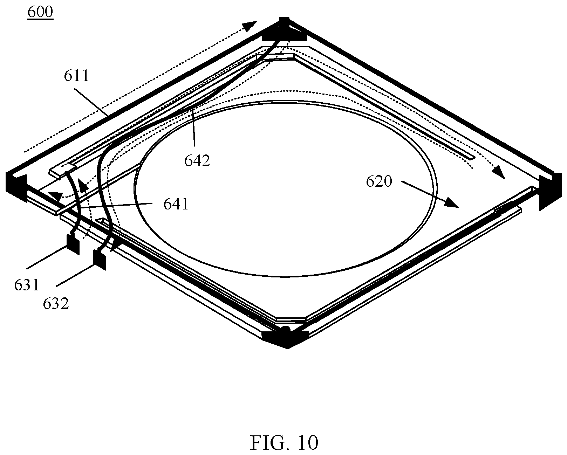

With reference to FIG. 10 to FIG. 19, the following describes in detail an electrical connection relationship between components in the SMA motor 600.

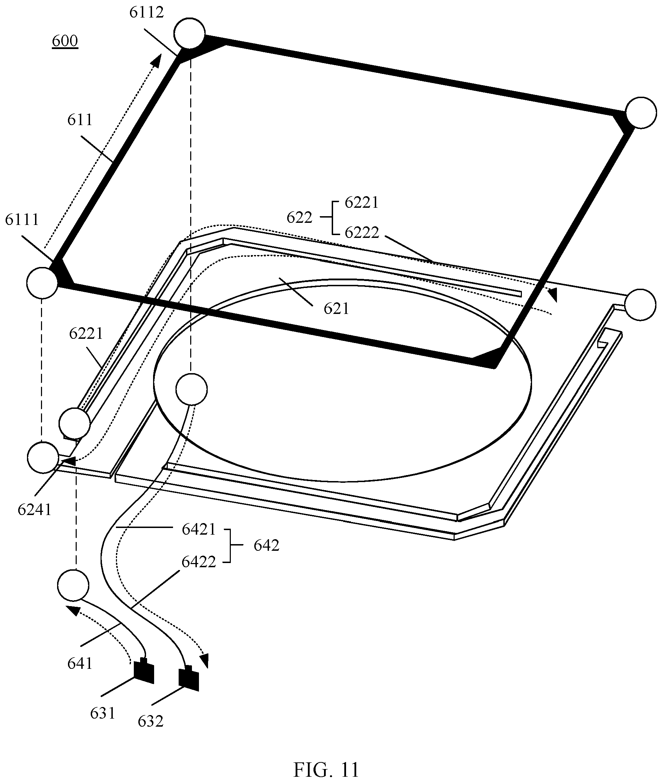

As shown in FIG. 10 and FIG. 11, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The first end 6111 of the SMA wire 611 may be mechanically connected to the first end part 6241 of the spring plate 620, and the second end 6112 of the SMA wire 611 may be mechanically connected to the electrical connection line 642. The electrical connection line 642 is electrically connected between the SMA wire 611 and the electrical connection port 632.

Because the first end part 6241 is connected to the first spring plate arm segment 6221, an electrical signal from the electrical connection port 631 may sequentially pass through the common electrical connection line 641, the first spring plate arm 622, the spring plate body 621, the SMA wire 611, and the electrical connection line 642, and finally arrive at the electrical connection port 632 (as shown by a dashed line or a dot line in FIG. 10 and FIG. 11). The electrical connection port 631, the common electrical connection line 641, the first spring plate arm 622, the spring plate body 621, the SMA wire 611, the electrical connection line 642, and the electrical connection port 632 may be approximately understood as being in a series electrical connection.

The electrical connection line 642 may include a first portion 6421 and a second portion 6422. The second portion 6422 of the electrical connection line 642 may be closer to the electrical connection port 632 than the first portion 6421 of the electrical connection line 642.

A current on the common electrical connection line 641 may flow from the electrical connection port 631 to the SMA wire 611, and a current on the electrical connection line 642 may flow from the SMA wire 611 to the electrical connection port 632.

The first portion 6421 of the electrical connection line 642 may be disposed close to the SMA wire 611, that is, the SMA wire 611 and the first portion 6421 of the electrical connection line 642 are spaced from each other, and a maximum spacing distance between the SMA wire 611 and the first portion 6421 of the electrical connection line 642 may be less than a preset threshold. A current on the first portion 6421 of the electrical connection line 642 may be in a direction (approximately) opposite to a current on the SMA wire 611. That is, there may be a small spacing between a current path on the SMA wire 611 and a current path on the first portion 6421 of the electrical connection line 642. This helps implement tight coupling between the SMA wire 611 and the first portion 6421 of the electrical connection line 642.

The second portion 6422 of the electrical connection line 642 may be disposed close to the common electrical connection line 641, that is, the common electrical connection line 641 and the second portion 6422 of the electrical connection line 642 are spaced from each other, and a maximum spacing distance between the common electrical connection line 641 and the second portion 6422 of the electrical connection line 642 may be less than the preset threshold. A current on the common electrical connection line 641 may be in a direction (approximately) opposite to a current on the second portion 6422 of the electrical connection line 642. That is, there may be a small spacing between a current path on the common electrical connection line 641 and a current path on the second portion 6422 of the electrical connection line 642. This helps implement tight coupling between the common electrical connection line 641 and the second portion 6422 of the electrical connection line 642.

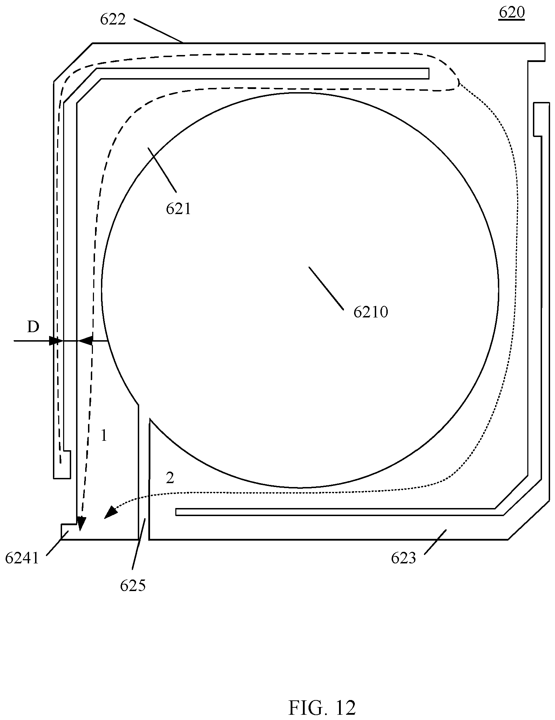

As shown in FIG. 12, a current on the spring plate 620 may flow from an open end of the first spring plate arm 622 to a tail end of the first spring plate arm 622, then flow into the spring plate body 621, and finally flow into the first end part 6241 of the spring plate body 621. In order for enable a current on the first spring plate arm 622 and a current on the spring plate body 621 to be opposite (approximately) in directions and close to each other, a current from the tail end of the first spring plate arm 622 to the first end part 6241 may be limited to a greatest extent to flow from a side of the spring plate body 621 close to the first spring plate arm 622 (that is, flow only from a side of the spring plate through hole 6210 close to the first spring plate arm 622, that is, flow only from a direction shown by an arrow 1 in FIG. 12, not from a direction shown by an arrow 2 in FIG. 12).

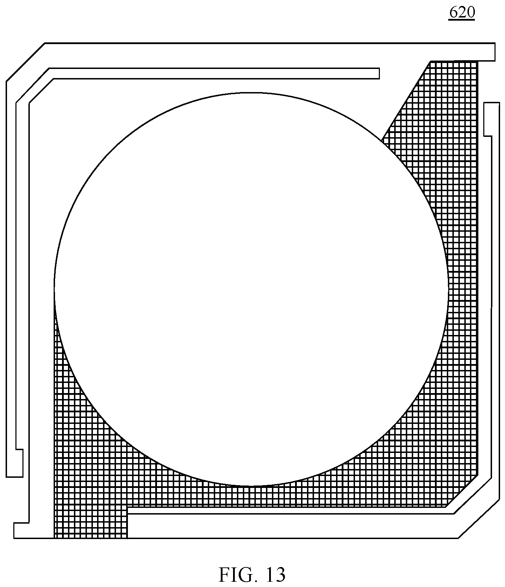

In an example, the spring plate body 621 may include a first slit 625. The first slit 625 may communicate with the spring plate through hole 6210. The first slit 625 may be, for example, located near the second spring plate arm 623. In other words, the first slit 625 may cut off a portion of the spring plate body 621, so that a side that is of the spring plate body 621 and that is close to the second spring plate arm 623 is disconnected or open. A filling pattern in FIG. 13 shows a region in which the first slit 625 may be disposed on the spring plate 620. The first slit 625 may accommodate or not accommodate an insulation material. The insulation material may be insulation adhesive. The insulation material may alternatively be fastened in the first slit 625 by welding or the like.

To enable a current on the spring plate 620 to have a tight coupling characteristic, the first spring plate arm 622 may be disposed close to the spring plate body 621. As shown in FIG. 12, the first spring plate arm 622 may surround a portion of a periphery of the spring plate body 621, and a maximum spacing distance D between the first spring plate arm 622 and the spring plate body 621 may be less than a preset threshold (for example, 2 mm). In other words, the first spring plate arm 622 and the spring plate body 621 are disposed opposite to and spaced from each other in a horizontal direction of the first spring plate arm 622. That is, there may be a small spacing between a current path on the first spring plate arm 622 and a current path on the spring plate body 621. This helps implement tight coupling between the first spring plate arm 622 and the spring plate body 621.

At different positions of the first spring plate arm 622, specific horizontal directions of the first spring plate arm 622 may be different. For example, at the first spring plate arm segment 6221, the horizontal direction of the first spring plate arm 622 may be any direction (an X₁ direction shown in FIG. 7) that is vertically disposed relative to the first spring plate arm segment 6221. In this case, at the first spring plate arm segment 6221, the spacing distance between the first spring plate arm 622 and the spring plate body 621 in the horizontal direction of the first spring plate arm 622 may be a spacing distance between the first spring plate arm segment 6221 and the spring plate body 621 in any direction perpendicular to the first spring plate arm segment 6221. For another example, at the first spring plate arm segment 6222, the horizontal direction of the first spring plate arm 622 may be any direction (an X₂ direction shown in FIG. 7) that is vertically disposed relative to the first spring plate arm segment 6222. In this case, at the second spring plate arm segment 6222, the spacing distance between the first spring plate arm 622 and the spring plate body 621 in the horizontal direction of the first spring plate arm 622 may be a spacing distance between the second spring plate arm segment 6222 and the spring plate body 621 in any direction perpendicular to the second spring plate arm segment 6222.

In conclusion, a tight coupling relationship may be formed between a plurality of conductive components from the electrical connection port 631 to the electrical connection port 632.

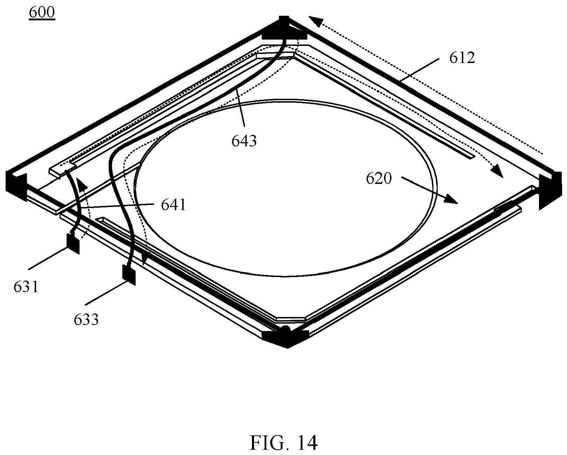

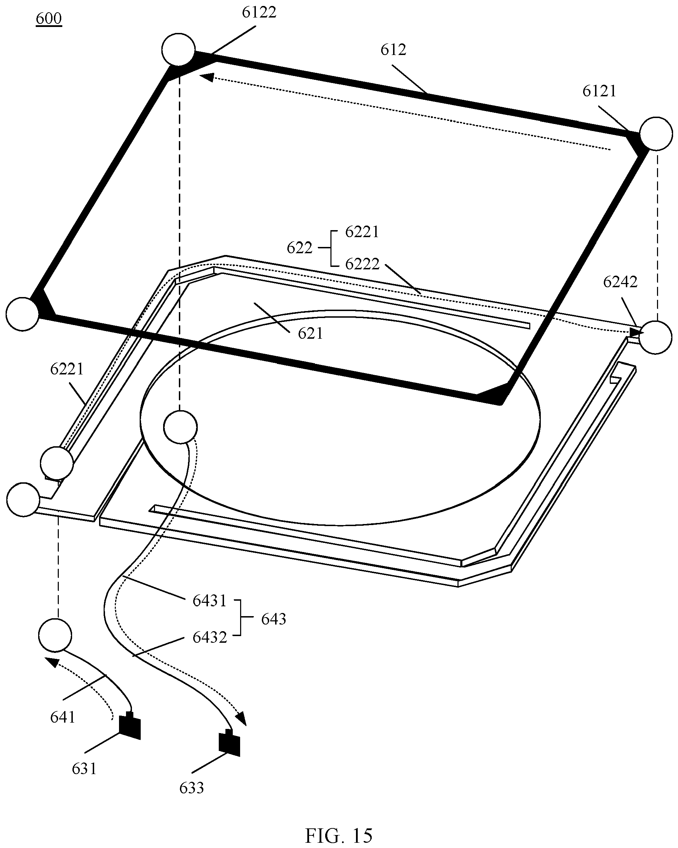

As shown in FIG. 14 and FIG. 15, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The second end part 6242 of the spring plate 620 is mechanically connected to the first end 6121 of the SMA wire 612, and the second end 6122 of the SMA wire 612 is mechanically connected to the electrical connection line 643. The electrical connection line 643 is electrically connected between the SMA wire 612 and the electrical connection port 633.

Because the second end part 6242 is connected to the first spring plate arm segment 6221, an electrical signal from the electrical connection port 631 may sequentially pass through the common electrical connection line 641, the first spring plate arm 622, the SMA wire 612, and the electrical connection line 643, and finally arrive at the electrical connection port 633 (as shown by a dashed line or a dot line in FIG. 14 and FIG. 15). The electrical connection port 631, the common electrical connection line 641, the first spring plate arm 622, the SMA wire 612, the electrical connection line 643, and the electrical connection port 633 may be approximately understood as being in a series electrical connection.

The electrical connection line 643 may include a first portion 6431 and a second portion 6432. The second portion 6432 of the electrical connection line 643 may be closer to the electrical connection port 633 than the first portion 6431 of the electrical connection line 643.

A current on the first spring plate arm segment 6221 may flow from the electrical connection port 631 to the SMA wire 612, and a current on the first portion 6431 of the electrical connection line 643 may flow from the SMA wire 612 to the electrical connection port 633. The first portion 6431 of the electrical connection line 643 may be disposed close to the first spring plate arm segment 6221, that is, the first portion 6431 of the electrical connection line 643 and the first spring plate arm segment 6221 may be spaced from each other, and a maximum spacing distance between the first portion 6431 of the electrical connection line 643 and the first spring plate arm segment 6221 may be less than a preset threshold. A current on the first portion 6431 of the electrical connection line 643 may be in a direction (approximately) opposite to a current on the first spring plate arm segment 6221. That is, there may be a small spacing between a current path on the first portion 6431 of the electrical connection line 643 and a current path on the first spring plate arm segment 6221. This helps implement tight coupling between the first portion 6431 of the electrical connection line 643 and the first spring plate arm segment 6221.

A current on the common electrical connection line 641 may flow from the electrical connection port 631 to the SMA wire 612, and a current on the second portion 6432 of the electrical connection line 643 may flow from the SMA wire 612 to the electrical connection port 633. The second portion 6432 of the electrical connection line 643 may be disposed close to the common electrical connection line 641, that is, the common electrical connection line 641 and the second portion 6432 of the electrical connection line 643 may be spaced from each other, and a maximum spacing distance between the common electrical connection line 641 and the second portion 6432 of the electrical connection line 643 may be less than the preset threshold. A current on the common electrical connection line 641 may be in a direction (approximately) opposite to a current on the second portion 6432 of the electrical connection line 643. That is, there may be a small spacing between a current path on the common electrical connection line 641 and a current path on the second portion 6432 of the electrical connection line 643. This helps implement tight coupling between the common electrical connection line 641 and the second portion 6432 of the electrical connection line 643.

The second spring plate arm segment 6222 may be disposed close to the SMA wire 612, that is, the SMA wire 612 and the second spring plate arm segment 6222 may be spaced from each other, and a maximum spacing distance between the SMA wire 612 and the second spring plate arm segment 6222 may be less than the preset threshold. A current on the second spring plate arm segment 6222 may be in a direction (approximately) opposite to a current on the SMA wire 612. That is, there may be a small spacing between a current path on the SMA wire 612 and a current path on the second spring plate arm segment 6222. This helps implement tight coupling between the SMA wire 612 and the second spring plate arm segment 6222.

In conclusion, a tight coupling relationship may be formed between a plurality of conductive components from the electrical connection port 631 to the electrical connection port 633.

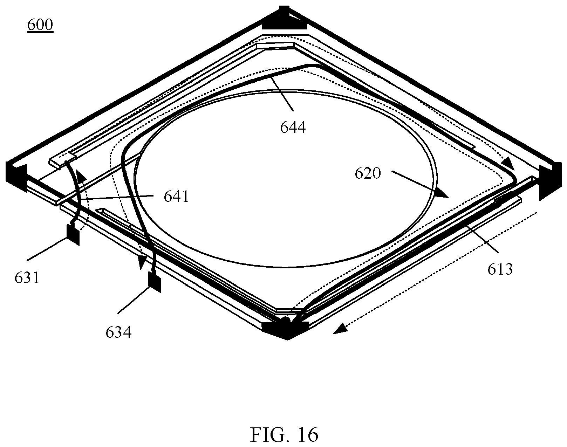

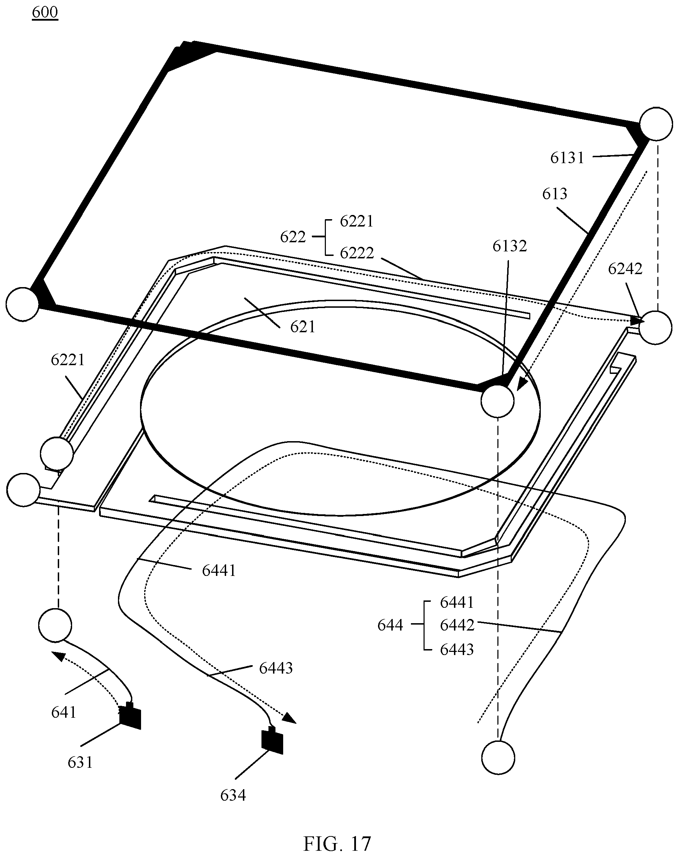

As shown in FIG. 16 and FIG. 17, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The first end 6131 of the SMA wire 613 may be mechanically connected to the second end part 6242 of the spring plate 620, and the second end 6132 of the SMA wire 613 may be mechanically connected to the electrical connection line 644. The electrical connection line 644 is electrically connected between the SMA wire 613 and the electrical connection port 634.

Because the second end part 6242 is connected to the first spring plate arm segment 6221, an electrical signal from the electrical connection port 631 may sequentially pass through the common electrical connection line 641, the first spring plate arm 622, the SMA wire 613, and the electrical connection line 644, and finally arrive at the electrical connection port 634 (as shown by a dashed line or a dot line in FIG. 16 and FIG. 17). The electrical connection port 631, the common electrical connection line 641, the first spring plate arm 622, the SMA wire 613, the electrical connection line 644, and the electrical connection port 634 may be approximately understood as being in a series electrical connection.

The electrical connection line 644 may include a first portion 6441, a second portion 6442, and a third portion 6443. The third portion 6443 of the electrical connection line 644 may be closer to the electrical connection port 634. The second portion 6442 of the electrical connection line 644 may be closer to the SMA wire 613. The first portion 6441 of the electrical connection line 644 is mechanically connected between the third portion 6443 of the electrical connection line 644 and the second portion 6442 of the electrical connection line 644.

A current on the first spring plate arm 622 may flow from the electrical connection port 631 to the SMA wire 613, and a current on the first portion 6441 of the electrical connection line 644 may flow from the SMA wire 613 to the electrical connection port 634. The first portion 6441 of the electrical connection line 644 may be disposed close to the first spring plate arm 622, that is, the first spring plate arm 622 and the first portion 6441 of the electrical connection line 644 may be spaced from each other, and a maximum spacing distance between the first spring plate arm 622 and the first portion 6441 of the electrical connection line 644 may be less than a preset threshold. A current on the first portion 6441 of the electrical connection line 644 may be in a direction (approximately) opposite to a current on the first spring plate arm 622. That is, there may be a small spacing between a current path on the first spring plate arm 622 and a current path on the first portion 6441 of the electrical connection line 644. This helps implement tight coupling between the first spring plate arm 622 and the first portion 6441 of the electrical connection line 644.

The second portion 6442 of the electrical connection line 644 may be disposed close to the SMA wire 613, that is, the SMA wire 613 and the second portion 6442 of the electrical connection line 644 may be spaced from each other, and a maximum spacing distance between the SMA wire 613 and the second portion 6442 of the electrical connection line 644 may be less than the preset threshold. A current on the second portion 6442 of the electrical connection line 644 may be in a direction (approximately) opposite to a current on the SMA wire 613. That is, there may be a small spacing between a current path on the SMA wire 613 and a current path on the second portion 6442 of the electrical connection line 644. This helps implement tight coupling between the SMA wire 613 and the second portion 6442 of the electrical connection line 644.

A current on the common electrical connection line 641 may flow from the electrical connection port 631 to the SMA wire 613, and a current on the third portion 6443 of the electrical connection line 644 may flow from the SMA wire 613 to the electrical connection port 634. The third portion 6443 of the electrical connection line 644 may be disposed close to the common electrical connection line 641, that is, the common electrical connection line 641 and the third portion 6443 of the electrical connection line 644 are spaced from each other, and a maximum spacing distance between the common electrical connection line 641 and the third portion 6443 of the electrical connection line 644 may be less than the preset threshold. A current on the common electrical connection line 641 may be in a direction (approximately) opposite to a current on the third portion 6443 of the electrical connection line 644. That is, there may be a small spacing between a current path on the common electrical connection line 641 and a current path on the third portion 6443 of the electrical connection line 644. This helps implement tight coupling between the common electrical connection line 641 and the third portion 6443 of the electrical connection line 644.

In conclusion, a tight coupling relationship may be formed between a plurality of conductive components from the electrical connection port 631 to the electrical connection port 634.

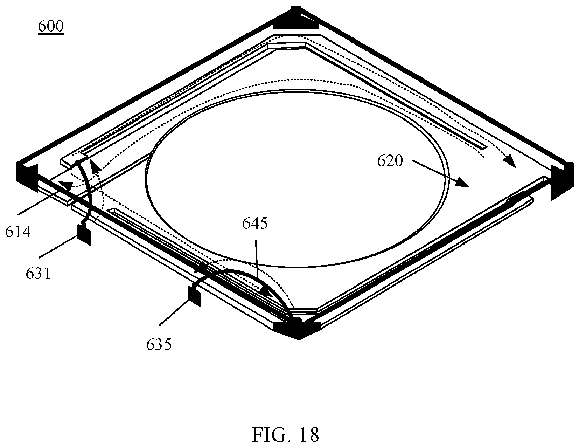

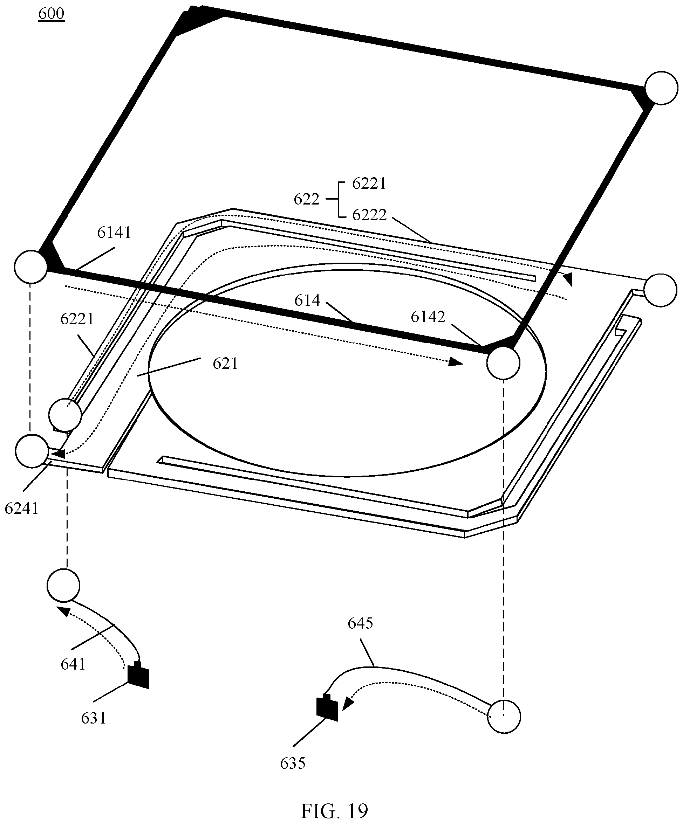

As shown in FIG. 18 and FIG. 19, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The first end 6141 of the SMA wire 614 may be mechanically connected to the first end part 6241 of the spring plate 620, and the second end 6142 of the SMA wire 614 may be mechanically connected to the electrical connection line 645. The electrical connection line 645 is electrically connected between the SMA wire 614 and the electrical connection port 635.

Because the first end part 6241 is connected to the first spring plate arm segment 6221, an electrical signal from the electrical connection port 631 may sequentially pass through the common electrical connection line 641, the first spring plate arm 622, the spring plate body 621, the SMA wire 614, and the electrical connection line 645, and finally arrive at the electrical connection port 635 (as shown by a dashed line or a dot line in FIG. 18 and FIG. 19). The electrical connection port 631, the common electrical connection line 641, the first spring plate arm 622, the spring plate body 621, the SMA wire 614, the electrical connection line 645, and the electrical connection port 635 may be approximately understood as being in a series electrical connection.

The common electrical connection line 641 may be disposed close to the SMA wire 614, that is, the common electrical connection line 641 and the SMA wire 614 are spaced from each other, and a maximum spacing distance between the common electrical connection line 641 and the SMA wire 614 may be less than a preset threshold. A current on the common electrical connection line 641 may be in a direction (approximately) opposite to a current on the SMA wire 614. That is, there may be a small spacing between a current path on the common electrical connection line 641 and a current path on the SMA wire 614. This helps implement tight coupling between the common electrical connection line 641 and the SMA wire 614.

A current on the spring plate 620 may flow from an open end of the first spring plate arm 622 to a tail end of the first spring plate arm 622, then flow into the spring plate body 621, and finally flow into the first end part 6241 of the spring plate body 621. The first spring plate arm 622 of the spring plate 620 may be disposed close to the spring plate body 621, that is, the first spring plate arm 622 and the spring plate body 621 are spaced from each other, and a maximum spacing distance between the first spring plate arm 622 and the spring plate body 621 may be less than the preset threshold. A current on the first spring plate arm 622 may be in a direction (approximately) opposite to a current on the spring plate 620. That is, there may be a small spacing between a current path on the first spring plate arm 622 and a current path on the spring plate body 621. This helps implement tight coupling between the first spring plate arm 622 and the spring plate body 621.

The electrical connection line 645 may be disposed close to the SMA wire 614, that is, the electrical connection line 645 and the SMA wire 614 are spaced from each other, and a maximum spacing distance between the electrical connection line 645 and the SMA wire 614 may be less than the preset threshold. A current on the electrical connection line 645 may be in a direction (approximately) opposite to a current on the SMA wire 614. That is, there may be a small spacing between a current path on the electrical connection line 645 and a current path on the SMA wire 614. This helps implement tight coupling between the electrical connection line 645 and the SMA wire 614.

Optionally, a spacing between the electrical connection port 631 and the electrical connection port 635 may be small, so that the common electrical connection line 641 and the electrical connection line 645 can cancel more interference magnetic fields generated by the SMA wire 614.

In conclusion, a tight coupling relationship may be formed between a plurality of conductive components from the electrical connection port 631 to the electrical connection port 635.

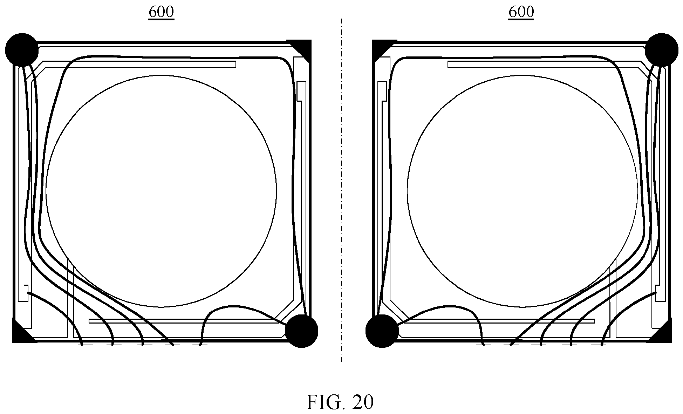

Two SMA motor 600 structures shown in FIG. 20 may be obtained by using the structures and the electrical connection relationships shown in FIG. 10 to FIG. 19. The left figure of FIG. 20 may correspond to the embodiment shown in FIG. 6 or FIG. 7. The right figure of FIG. 20 may correspond to a mirror structure in the embodiment shown in FIG. 6 or FIG. 7, and details are not described herein again.

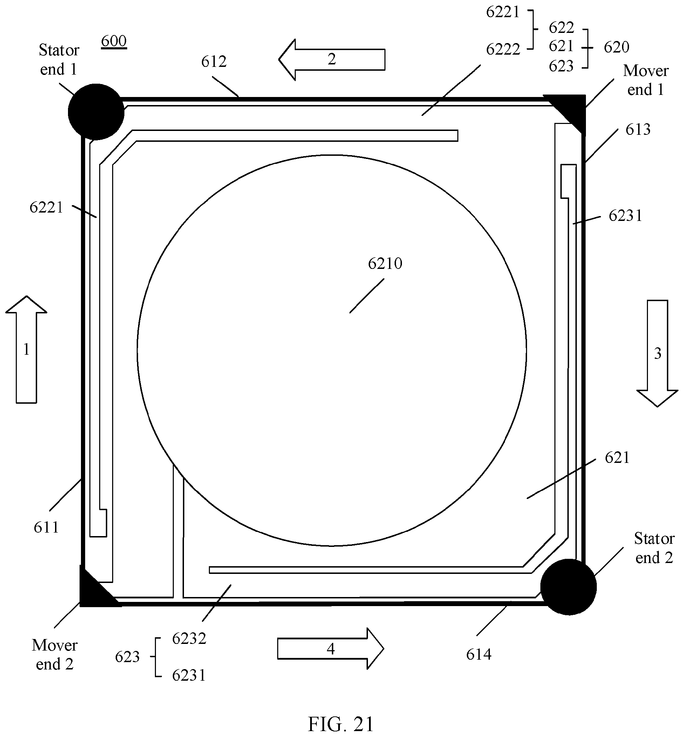

The following describes, with reference to FIG. 21, a working principle of implementing optical image stabilization by the SMA motor 600.

When the SMA wire 611 is powered on or driven, the SMA wire 611 contracts by heat, and the mover end 2 has a trend of moving towards the stator end 1 (as shown by an arrow 1 in FIG. 21). Then, the first spring plate arm segment 6221 of the first spring plate arm 622 is squeezed and can prevent the SMA wire 611 from continuing to contract. An interaction force between the SMA wire 611 and the first spring plate arm segment 6221 may cause the lens array 2022 shown in FIG. 2 to shift or rotate to a specified position. After the SMA wire 611 is powered off, the SMA wire 611 is cooled and elongated, and is restored to an original shape under an action of the first spring plate arm segment 6221.

When the SMA wire 612 is powered on or driven, the SMA wire 612 contracts by heat, and the mover end 1 has a trend of moving towards the stator end 2 (as shown by an arrow 2 in FIG. 21). Then, the second spring plate arm segment 6222 of the first spring plate arm 622 is squeezed and can prevent the SMA wire 612 from continuing to contract. An interaction force between the SMA wire 612 and the second spring plate arm segment 6222 may cause the lens array 2022 shown in FIG. 2 to shift or rotate to a specified position. After the SMA wire 612 is powered off, the SMA wire 612 is cooled and elongated, and is restored to an original shape under an action of the second spring plate arm segment 6222.

When the SMA wire 613 is powered on or driven, the SMA wire 613 contracts by heat, and the mover end 1 has a trend of moving towards the stator end 2 (as shown by an arrow 3 in FIG. 21). Then, the third spring plate arm segment 6231 of the second spring plate arm 623 is squeezed and can prevent the SMA wire 613 from continuing to contract. An interaction force between the SMA wire 613 and the third spring plate arm segment 6231 may cause the lens array 2022 shown in FIG. 2 to shift or rotate to a specified position. After the SMA wire 613 is powered off, the SMA wire 613 is cooled and elongated, and is restored to an original shape under an action of the third spring plate arm segment 6231.

When the SMA wire 614 is powered on or driven, the SMA wire 614 contracts by heat, and the mover end 2 has a trend of moving towards the stator end 2 (as shown by an arrow 4 in FIG. 21). Then, the fourth spring plate arm segment 6232 of the second spring plate arm 623 is squeezed and can prevent the SMA wire 614 from continuing to contract. An interaction force between the SMA wire 614 and the fourth spring plate arm segment 6232 may cause the lens array 2022 shown in FIG. 2 to shift or rotate to a specified position. After the SMA wire 614 is powered off, the SMA wire 614 is cooled and elongated, and is restored to an original shape under an action of the fourth spring plate arm segment 6232.

In one example, a chip (or a processor) that controls the SMA motor 600 may independently control the SMA wire 611, the SMA wire 612, the SMA wire 613, and the SMA wire 614.

For example, the chip that controls the SMA motor 600 may calculate a to-be-moved position of the lens array 2022 shown in FIG. 2, and determine that the SMA wire 611, the SMA wire 612, the SMA wire 613, and the SMA wire 614 correspond to a contraction amount 1, a contraction amount 2, a contraction amount 3, and a contraction amount 4. Then, within a time period 1, the chip may control, based on a current intensity 1 corresponding to the contraction amount 1 of the SMA wire 611, a circuit board 203 to output a current of the current intensity 1 to the SMA wire 611, and stop driving the SMA wire 612, the SMA wire 613, and the SMA wire 614. Within a time period 2, the chip may control, based on a current intensity 2 corresponding to the contraction amount 2 of the SMA wire 612, the circuit board 203 to output a current of the current intensity 2 to the SMA wire 612, and stop driving the SMA wire 611, the SMA wire 613, and the SMA wire 614. Within a time period 3, the chip may control, based on a current intensity 3 corresponding to the contraction amount 3 of the SMA wire 613, the circuit board 203 to output a current of the current intensity 3 to the SMA wire 613, and stop driving the SMA wire 611, the SMA wire 612, and the SMA wire 614. Within a time period 4, the chip may control, based on a current intensity 4 corresponding to the contraction amount 4 of the SMA wire 614, the circuit board 203 to output a current of the current intensity 4 to the SMA wire 614, and stop driving the SMA wire 611, the SMA wire 612, and the SMA wire 613.

When any one of the SMA wire 611, the SMA wire 612, and the SMA wire 614 is driven, another conductive component electrically connected to any SMA wire is also driven. For example, with reference to embodiments shown in FIG. 6 to FIG. 21, when the SMA wire 611 is driven, the common electrical connection line 641, the first spring plate arm 622, the spring plate body 621, and the electrical connection line 642 are also driven. When the SMA wire 612 is driven, the common electrical connection line 641, the first spring plate arm 622, and the electrical connection line 643 are also driven. When the SMA wire 611 is driven, the common electrical connection line 641, the first spring plate arm 622, and the electrical connection line 644 are also driven. When the SMA wire 611 is driven, the common electrical connection line 641, the first spring plate arm 622, the spring plate body 621, and the electrical connection line 645 are also driven.

In conclusion, the SMA motor 600 is powered on or driven, so that the SMA motor 600 having a thermal contraction and cold expansion feature may be deformed, and the lens array 2022 shown in FIG. 2 may be driven to shift and rotate relative to the camera housing 201, to implement an optical image stabilization function. In an example, with reference to FIG. 2 and FIG. 21, before the camera module 200 prepares to shoot an image, the circuit board 203 may supply power to the voice coil motor 204, to drive the voice coil motor 204 to perform auto focus. The circuit board 203 may further supply power to the SMA motor 600, to drive the SMA motor 600 to perform optical image stabilization.

It should be understood that, in another example, the voice coil motor 204 and the SMA motor 600 in the camera module 200 may implement the optical image stabilization function or the auto focus function jointly or in a linked manner.

To describe technical effects of embodiments shown in FIG. 6 to FIG. 21, the following first describes a principle of tight coupling.

According to the Biot-Savart Law (Biot-Savart Law), any shape of through-current conductor may be equivalent to several current paths. A magnetic induction intensity B generated by any magnetic field in space may be obtained by using a dB vector integral of a magnetic induction intensity generated by these current paths at this point. An electrical connection line having a tight coupling characteristic generally includes two conducting wires that are parallel to each other and are spaced at a very small distance, and the two conducting wires have a characteristic that current directions are opposite when a current passes through the two conducting wires. Therefore, the two conducting wires may be equivalent to two current paths during through-current, and magnetic induction intensities of the two current paths at any surrounding point may be approximately cancelled. If a size of the SMA motor 600 may be far less than a wavelength corresponding to a working frequency of 1 KHz to 100 MHz, power supply phases of any two points of an SMA electrical connection line may be approximately the same.

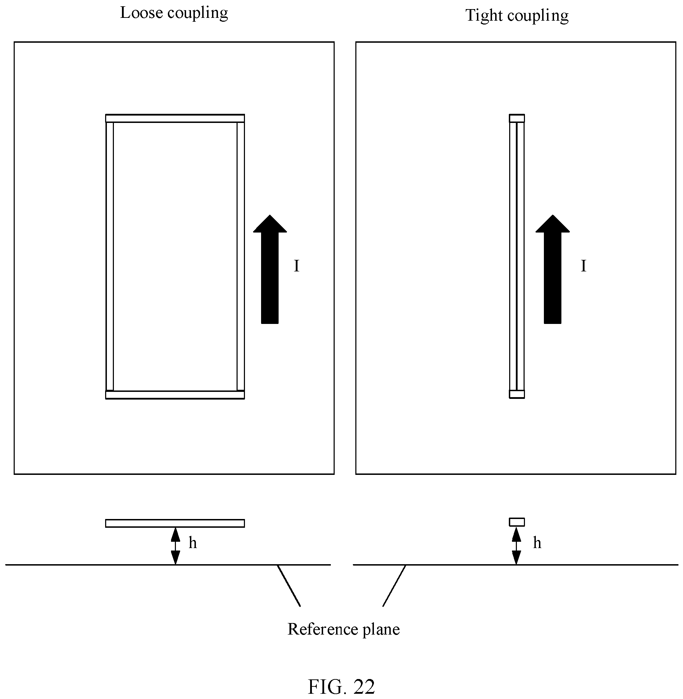

The left figure of FIG. 22 shows two views of an electrical connection line having a loose coupling characteristic. The right figure of FIG. 22 shows two views of an electrical connection line having a tight coupling characteristic. It is assumed that currents of the two electrical connection lines are the same and are both I, and distances from the two electrical connection lines to a reference plane are the same and are both h.

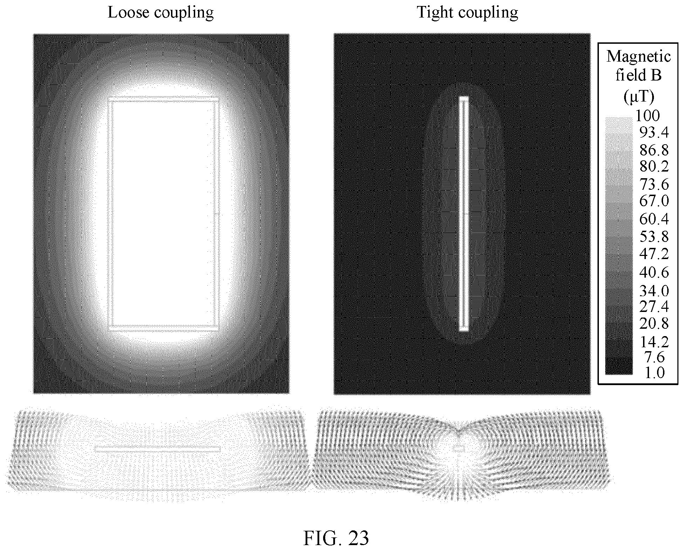

The left figure of FIG. 23 shows a schematic diagram of simulation of a magnetic field of an electrical connection line having a loose coupling characteristic. The right figure of FIG. 23 shows a schematic diagram of simulation of a magnetic field of an electrical connection line having a tight coupling characteristic. It can be learned from a scale shown in FIG. 23 that the electrical connection line having the loose coupling characteristic may generate strong magnetic field distribution with a large area on the reference plane, and a magnetic field integral value may be, for example, 4321 pWb; and a magnetic field generated by the electrical connection line having the tight coupling characteristic on the reference plane is weak, and a magnetic field integral value may be, for example, 213 pWb. It can be learned that, if the electrical connection line having the tight coupling characteristic is used, in a relatively ideal case, a magnetic field generated on the reference plane may be reduced by about 95%. In addition, due to a cancellation function of a current path, the electrical connection line having the tight coupling characteristic may generate a relatively strong magnetic field only near the electrical connection line. In other words, the electrical connection line having the tight coupling characteristic may generate a centralized-distribution magnetic field.

It should be understood that, in addition to the current, there are a plurality of factors that affect an interference magnetic field intensity, for example, a factor such as a magnetic permeability of an electrical connector, a structure of the electrical connection line, and a size of the electrical connector. In this embodiment of this application, a solution for reducing an interference magnetic field is provided mainly from a perspective of a distance between a current direction and a current path. Another factor that affects the interference magnetic field is not described in this embodiment of this application.

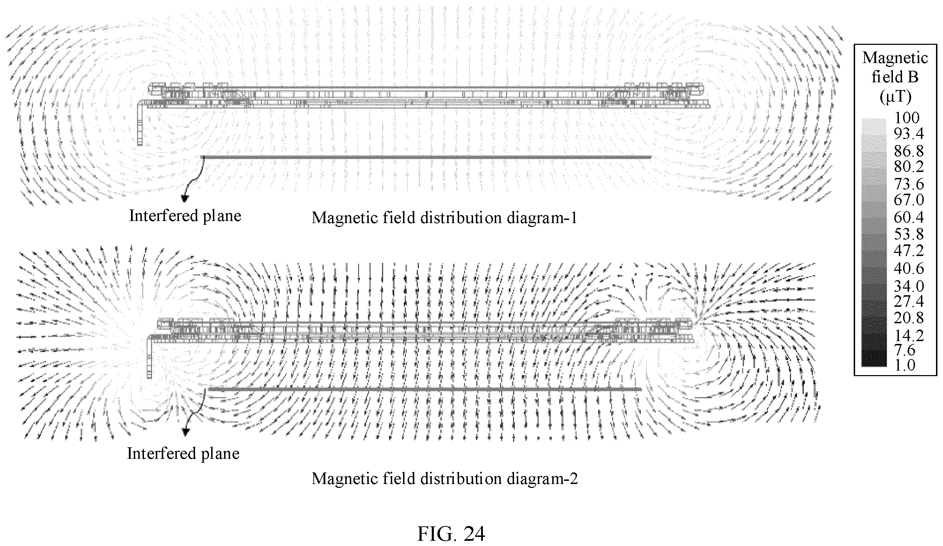

FIG. 24 shows two magnetic field distribution diagrams, which are respectively a magnetic field distribution diagram-1 and a magnetic field distribution diagram-2. The magnetic field distribution diagram-1 corresponds to the camera module 200 shown in FIG. 5. The magnetic field distribution diagram-2 corresponds to the camera module 200 shown in FIG. 6. An interfered plane in FIG. 24 may be a plane on which an image sensor is located. It can be learned from FIG. 24 that, in the magnetic field distribution diagram-1, a magnetic field intensity near the interfered plane is relatively large; and in the magnetic field distribution diagram-2, a magnetic field intensity near the interfered plane is relatively small, and a relatively strong interference magnetic field is generated only near the SMA motor 600.

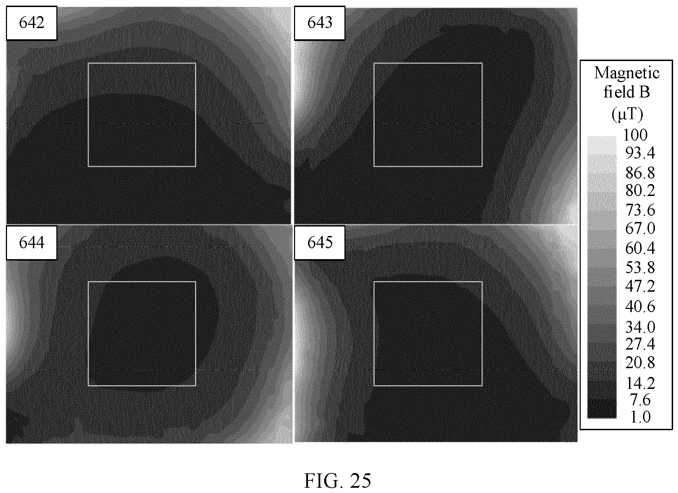

FIG. 25 shows magnetic field distribution diagrams corresponding to the electrical connection line 642, the electrical connection line 643, the electrical connection line 644, and the electrical connection line 645. A white box in FIG. 25 may correspond to the interfered plane in the following figure in FIG. 24. It can be learned from FIG. 25 that a magnetic field intensity on the interfered plane may be small.

It can be learned from embodiments shown in FIG. 6 to FIG. 25 that, a placement direction and a placement position of an electrical connector (for example, an electrical connection line) in the SMA motor 600 are designed, so that the SMA motor 600 may include at least one electrical connector. A current on the at least one electrical connector and a current on another conductive component are close to each other, are opposite in directions, and are approximately the same in current value, so that the electrical connection line of the SMA motor 600 may have a tight coupling characteristic. This helps reduce an interference magnetic field generated by the electrical connection line of the SMA motor 600, and helps another electronic component in a camera module work normally.

In addition, in embodiments shown in FIG. 6 to FIG. 25, a plurality of electrical connection manners having a tight coupling relationship are shown. In other words, a plurality of electrical connection manners that have a tight coupling feature and that correspond to the SMA wire 611, the SMA wire 612, the SMA wire 613, and the SMA wire 614 may be different from each other. Through these electrical connection manners, most conductive components in the SMA motor can form a tight coupling relationship with another conductive component, and these electrical connection manners can share a same conductive component. In addition to effectively reducing an interference magnetic field of the SMA motor, this helps reduce a quantity of electrical connectors in the SMA motor, and improve integration of the SMA motor. In addition, a reduction in the quantity of electrical connectors also helps reduce the interference magnetic field of the SMA motor.

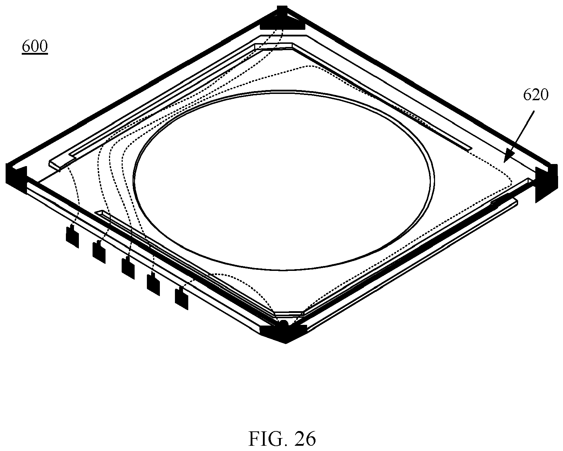

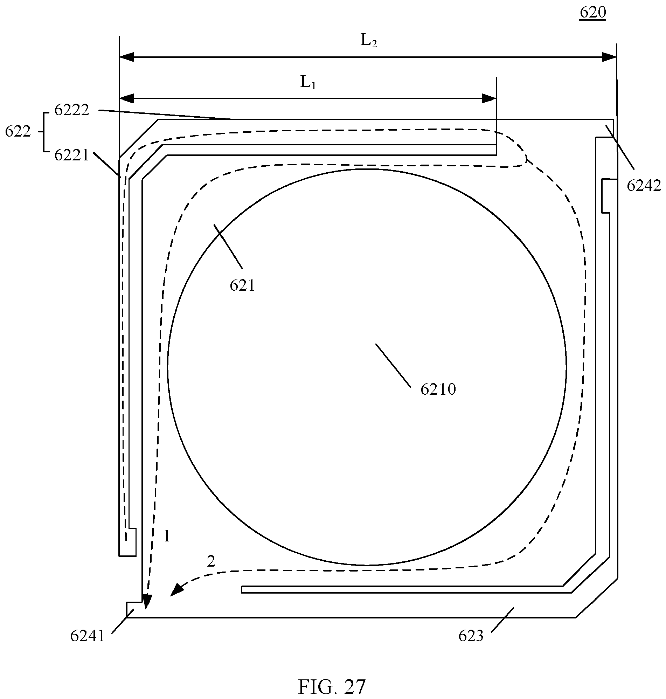

FIG. 26 and FIG. 27 show another SMA motor 600 according to an embodiment of this application. A difference between the another SMA motor 600 shown in FIG. 26 and FIG. 27 and the SMA motor 600 shown in FIG. 6 or FIG. 7 may include that the spring plate body 621 does not include the first slit 625 shown in FIG. 7. Therefore, a current from a tail end of the first spring plate arm 622 to the first end part 6241 may flow from a side that is of the spring plate body 621 and that is close to the first spring plate arm 622, or may flow from a side that is of the spring plate body 621 and that is close to the second spring plate arm 623 (that is, may flow from two sides of the spring plate through hole 6210, that is, may flow in directions shown by an arrow 1 and an arrow 2 in FIG. 27).

To improve a tight coupling degree between the first spring plate arm 622 and the spring plate body 621, a structure design for the spring plate 620 may be used to reduce a value of a current flowing from a side that is of the spring plate body 621 and that is close to the second spring plate arm 623. As shown in FIG. 27, a length L₁ of the second spring plate arm segment 6222 (which may be understood as a distance from a position that is of the second spring plate arm segment 6222 and that is farthest away from the second end part 6242 to a position that is of the second spring plate arm segment 6222 and that is closest to the second end part 6242) may be Li. A maximum spacing distance (a non-linear distance, which may be understood as a width of the spring plate 620 along the second spring plate arm segment 6222) between the first spring plate arm 622 and the second end part 6242 may be L₂, and Li and L₂ meet L₁≤9L₂/10 (for example, L₁≤2L₂/3). It can be seen that, in this way, a resistance of the side that is of the spring plate body 621 and that is close to the first spring plate arm 622 may be small, thereby helping increase a value of a current flowing from the side that is of the spring plate body 621 and that is close to the first spring plate arm 622.

However, the length of the second spring plate arm segment 6222 should not be reduced blindly. In an aspect, the length of the second spring plate arm segment 6222 is small, so that the second spring plate arm segment 6222 cannot effectively cancel an interference magnetic field generated by the SMA wire 612. In another aspect, the first spring plate arm 622 can cancel only a portion of the interference magnetic field generated by the spring plate body 621.

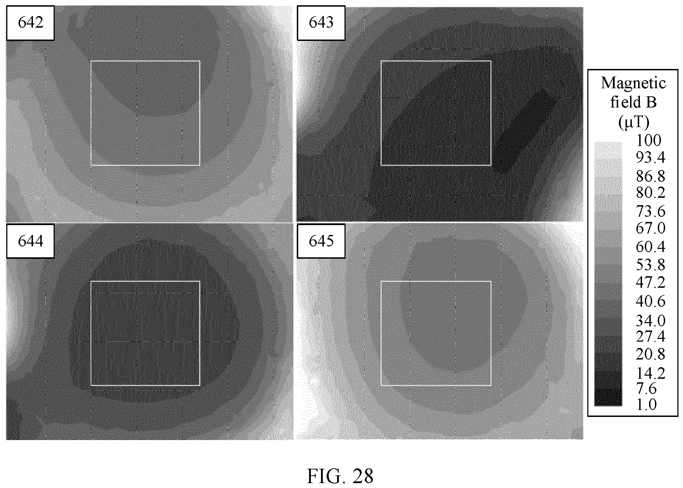

FIG. 28 shows magnetic field distribution diagrams corresponding to the electrical connection line 642, the electrical connection line 643, the electrical connection line 644, and the electrical connection line 645. A white box in FIG. 28 may correspond to the interfered plane in the following figure in FIG. 24. It can be learned from FIG. 28 and FIG. 23 that embodiments shown in FIG. 26 and FIG. 27 can reduce the magnetic field intensity of the interfered plane. It can be learned from FIG. 28 and FIG. 25 that, disposing the first slit 625 on the spring plate body 621 helps further reduce the magnetic field intensity of the interfered plane.

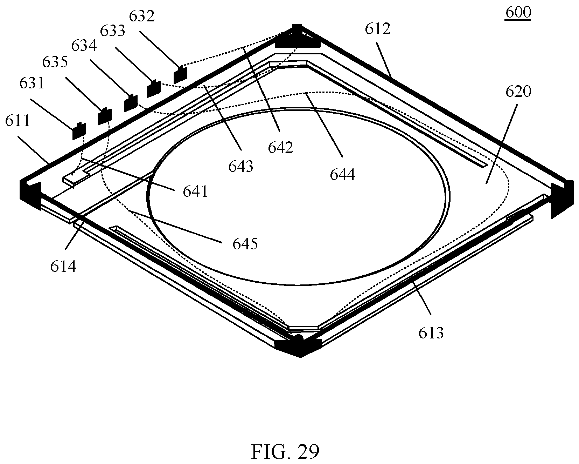

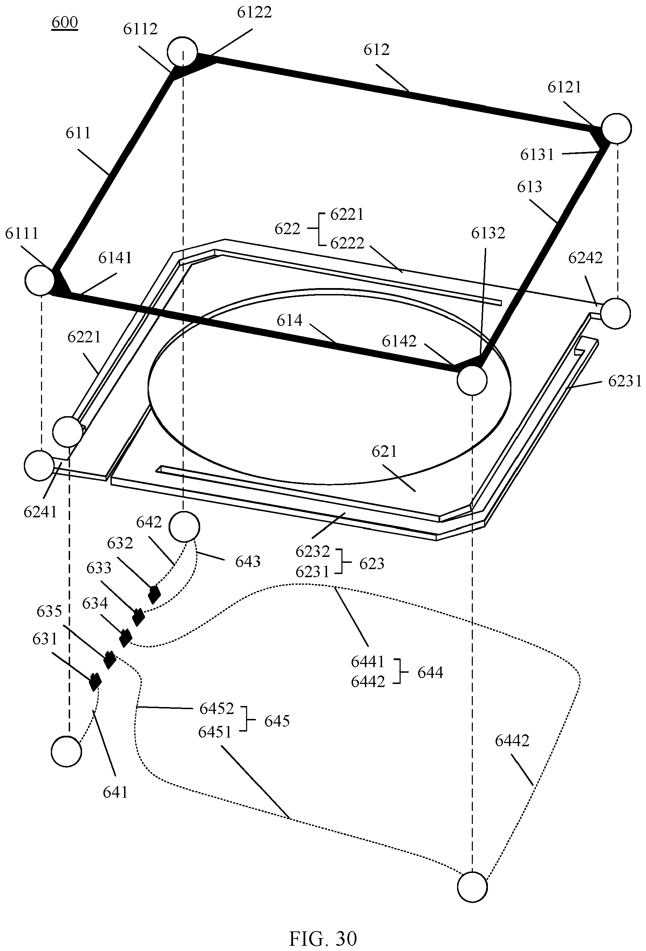

FIG. 29 and FIG. 30 show another SMA motor 600 according to an embodiment of this application. A difference between the another SMA motor 600 shown in FIG. 29 and FIG. 30 and the SMA motor 600 shown in FIG. 6 or FIG. 7 may include that the electrical connection port 631, the electrical connection port 632, the electrical connection port 633, the electrical connection port 634, and the electrical connection port 635 may be located on a same side of the SMA motor 600 as the SMA wire 611. In addition, the common electrical connection line 641, the electrical connection line 642, the electrical connection line 643, the electrical connection line 644, and the electrical connection line 645 may be disposed in different manners.

The common electrical connection line 641 may be disposed close to the SMA wire 611 or the first spring plate arm segment 6221, that is, the common electrical connection line 641 and the SMA wire 611 or the first spring plate arm segment 6221 may be spaced from each other, and a maximum spacing distance between the common electrical connection line 641 and the SMA wire 611 or the first spring plate arm segment 6221 may be less than a preset threshold. A current on the common electrical connection line 641 may be in a direction (approximately) opposite to a current on the SMA wire 611 or the first spring plate arm segment 6221. That is, there may be a small spacing between a current path on the common electrical connection line 641 and a current path on the SMA wire 611 or the first spring plate arm segment 6221. This helps implement tight coupling between the common electrical connection line 641 and the SMA wire 611 or the first spring plate arm segment 6221.

The electrical connection line 642 may be disposed close to the SMA wire 611, that is, the electrical connection line 642 and the SMA wire 611 may be spaced from each other, and a maximum spacing distance between the electrical connection line 642 and the SMA wire 611 may be less than the preset threshold. A current on the electrical connection line 642 may be in a direction (approximately) opposite to a current on the SMA wire 611. That is, there may be a small spacing between a current path on the electrical connection line 642 and a current path on the SMA wire 611. This helps implement tight coupling between the electrical connection line 642 and the SMA wire 611.

The electrical connection line 643 may be disposed close to the first spring plate arm segment 6221, that is, the electrical connection line 642 and the first spring plate arm segment 6221 may be spaced from each other, and a maximum spacing distance between the electrical connection line 642 and the first spring plate arm segment 6221 may be less than the preset threshold. A current on the electrical connection line 643 may be in a direction (approximately) opposite to a current on the first spring plate arm segment 6221. That is, there may be a small spacing between a current path on the electrical connection line 642 and a current path on the first spring plate arm segment 6221. This helps implement tight coupling between the electrical connection line 642 and the first spring plate arm segment 6221.

The electrical connection line 644 may include a first portion 6441 and a second portion 6442. The first portion 6441 of the electrical connection line 644 may be closer to the electrical connection port 634 than the second portion 6442 of the electrical connection line 644.

The first portion 6441 of the electrical connection line 644 may be disposed close to the second spring plate arm segment 6222, that is, the first portion 6441 of the electrical connection line 644 and the first spring plate arm 622 may be spaced from each other, and a maximum spacing distance between the first portion 6441 of the electrical connection line 644 and the first spring plate arm 622 may be less than a preset threshold. A current on the first portion 6441 of the electrical connection line 644 may be in a direction (approximately) opposite to a current on the first spring plate arm 622. That is, there may be a small spacing between a current path on the first portion 6441 of the electrical connection line 644 and a current path on the first spring plate arm 622. This helps implement tight coupling between the first portion 6441 of the electrical connection line 644 and the first spring plate arm 622.

The second portion 6442 of the electrical connection line 644 may be disposed close to the SMA wire 613, that is, the second portion 6442 of the electrical connection line 644 and the SMA wire 613 may be spaced from each other, and a maximum spacing distance between the second portion 6442 of the electrical connection line 644 and the SMA wire 613 may be less than the preset threshold. A current on the second portion 6442 of the electrical connection line 644 may be in a direction (approximately) opposite to a current on the SMA wire 613. That is, there may be a small spacing between a current path on the second portion 6442 of the electrical connection line 644 and a current path on the SMA wire 613. This helps implement tight coupling between the second portion 6442 of the electrical connection line 644 and the SMA wire 613.

The electrical connection line 645 may include a first portion 6451 and a second portion 6452. The second portion 6452 of the electrical connection line 645 may be closer to the electrical connection port 635 than the first portion 6451 of the electrical connection line 645.

The first portion 6451 of the electrical connection line 645 may be disposed close to the SMA wire 614, that is, the first portion 6451 of the electrical connection line 645 and the SMA wire 614 may be spaced from each other, and a maximum spacing distance between the first portion 6451 of the electrical connection line 645 and the SMA wire 614 may be less than the preset threshold. A current on the first portion 6451 of the electrical connection line 645 may be in a direction (approximately) opposite to a current on the SMA wire 614. That is, there may be a small spacing between a current path on the first portion 6451 of the electrical connection line 645 and a current path on the SMA wire 614. This helps implement tight coupling between the first portion 6451 of the electrical connection line 645 and the SMA wire 614.

The second portion 6452 of the electrical connection line 645 may be disposed close to the common electrical connection line 641, that is, the second portion 6452 of the electrical connection line 645 and the common electrical connection line 641 may be spaced from each other, and a maximum spacing distance between the second portion 6452 of the electrical connection line 645 and the common electrical connection line 641 may be less than the preset threshold. A current on the second portion 6452 of the electrical connection line 645 may be in a direction (approximately) opposite to a current on the common electrical connection line 641. That is, there may be a small spacing between a current path on the second portion 6452 of the electrical connection line 645 and a current path on the common current electrical connection line 641. This helps implement tight coupling between the second portion 6452 of the electrical connection line 645 and the common electrical connection line 641.

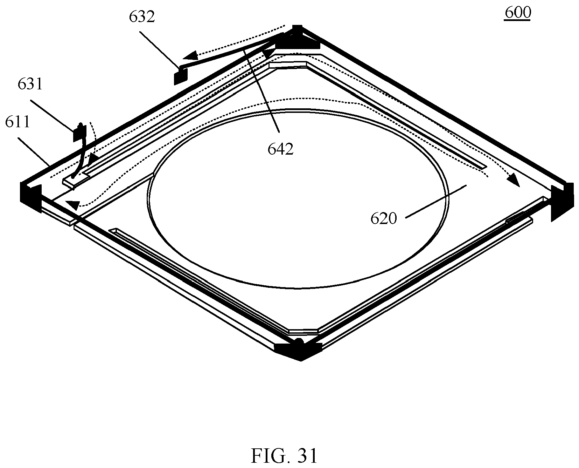

With reference to FIG. 31 to FIG. 38, the following describes in detail an electrical connection relationship of the SMA motor 600 shown in FIG. 29 and FIG. 30.

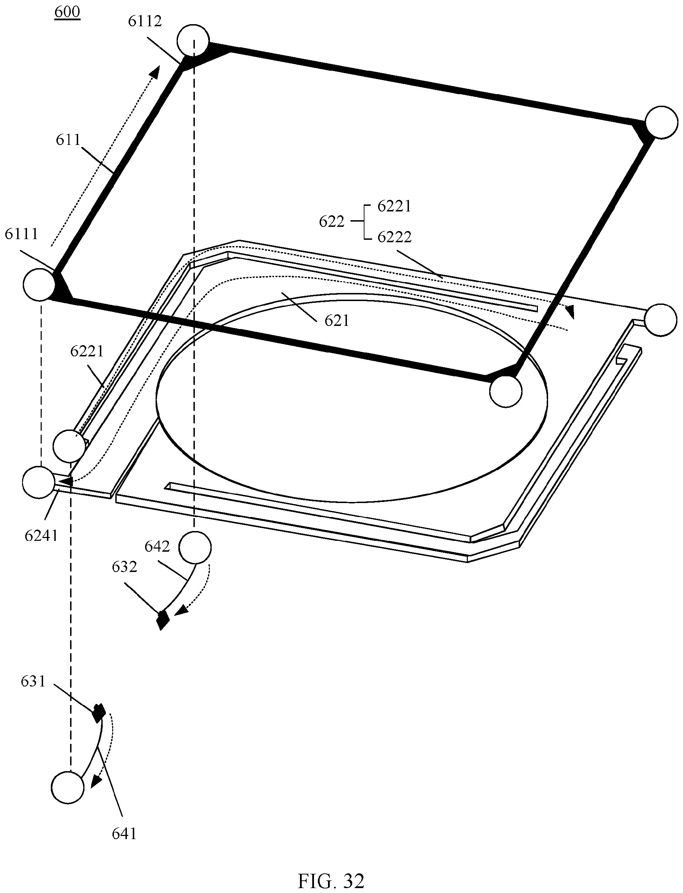

As shown in FIG. 31 and FIG. 32, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The first end part 6241 is connected to the first spring plate arm segment 6221 by using the spring plate body 621. The first end 6111 of the SMA wire 611 may be mechanically connected to the first end part 6241 of the spring plate 620, and the second end 6112 of the SMA wire 611 may be mechanically connected to the electrical connection line 642. The electrical connection line 642 is electrically connected between the SMA wire 611 and the electrical connection port 632.

An electrical signal from the electrical connection port 631 may sequentially pass through the common electrical connection line 641, the first spring plate arm 622, the spring plate body 621, the SMA wire 611, and the electrical connection line 642, and finally arrive at the electrical connection port 632 (as shown by a dashed line or a dot line in FIG. 31 and FIG. 32).

It can be learned from the foregoing description that a current on the common electrical connection line 641 may be in a direction (approximately) opposite to a current on the SMA wire 611. A current on the first spring plate arm 622 may be in a direction (approximately) opposite to a current on the spring plate body 621. A current on the electrical connection line 642 may be in a direction (approximately) opposite to a current on the SMA wire 611. It can be learned based on a position relationship among the common electrical connection line 641, the first spring plate arm 622, the spring plate body 621, the SMA wire 611, and the electrical connection line 642 that a tight coupling relationship may be formed between a plurality of conductive components from the electrical connection port 631 to the electrical connection port 632. The common electrical connection line 641 and the electrical connection line 642 may jointly cancel an interference magnetic field generated by the SMA wire 611. Optionally, a spacing between the electrical connection port 631 and the electrical connection port 632 may be small, so that the common electrical connection line 641 and the electrical connection line 642 can cancel more interference magnetic fields generated by the SMA wire 611.

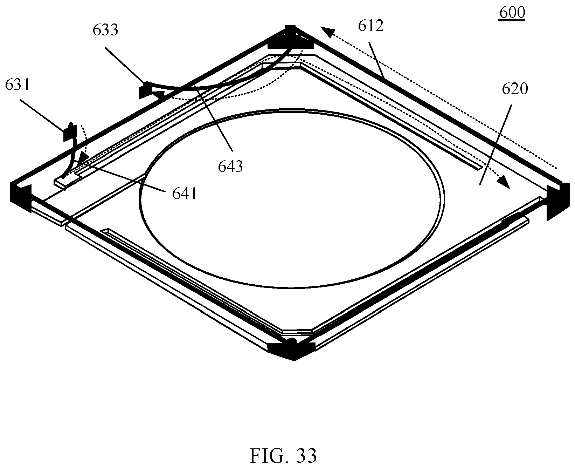

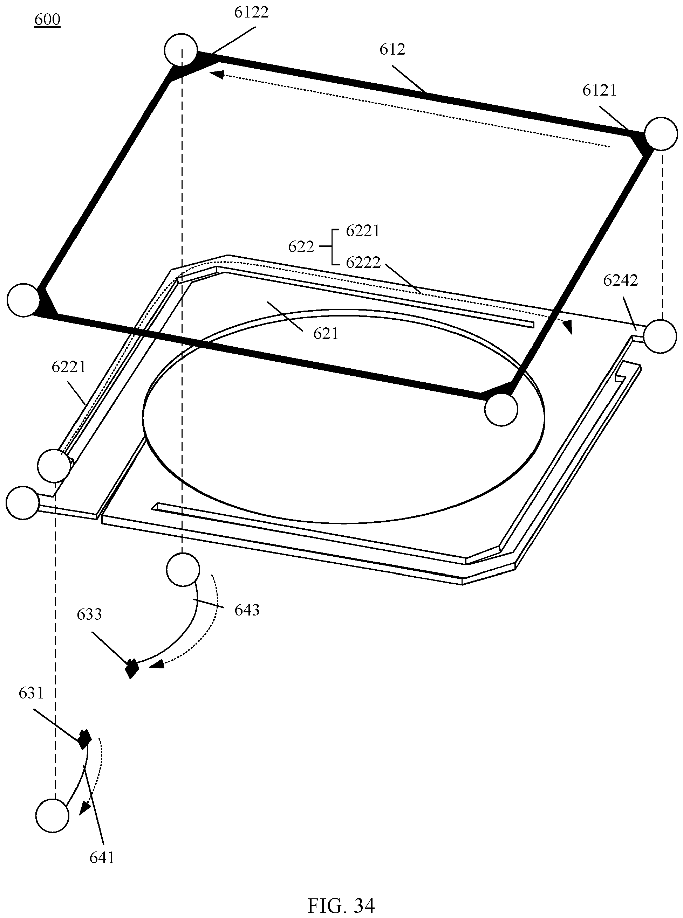

As shown in FIG. 33 and FIG. 34, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The second end part 6242 is connected to the first spring plate arm segment 6221. The first end 6121 of the SMA wire 612 is mechanically connected to the second end part 6242. The second end 6122 of the SMA wire 612 is mechanically connected to the electrical connection line 643 of the spring plate 620. The electrical connection line 643 is electrically connected between the SMA wire 612 and the electrical connection port 633.

An electrical signal from the electrical connection port 631 may sequentially pass through the common electrical connection line 641, the first spring plate arm 622, the SMA wire 612, and the electrical connection line 643, and finally arrive at the electrical connection port 633 (as shown by a dashed line or a dot line in FIG. 33 and FIG. 34).

It can be learned from the foregoing description that a current on the common electrical connection line 641 may be in a direction (approximately) opposite to a current on the first spring plate arm segment 6221. A current on the second spring plate arm segment 6222 may be in a direction (approximately) opposite to a current on the SMA wire 612. A current on the electrical connection line 643 may be in a direction (approximately) opposite to a current on the first spring plate arm segment 6221. It can be learned based on a position relationship among the common electrical connection line 641, the first spring plate arm 622, the SMA wire 612, and the electrical connection line 643 that a tight coupling relationship may be formed between a plurality of conductive components from the electrical connection port 631 to the electrical connection port 633. The common electrical connection line 641 and the electrical connection line 643 may jointly cancel an interference magnetic field generated by the first spring plate arm segment 6221. Optionally, a spacing between the electrical connection port 631 and the electrical connection port 632 may be small, so that the common electrical connection line 641 and the electrical connection line 642 can cancel more interference magnetic fields generated by the first spring plate arm segment 6221.

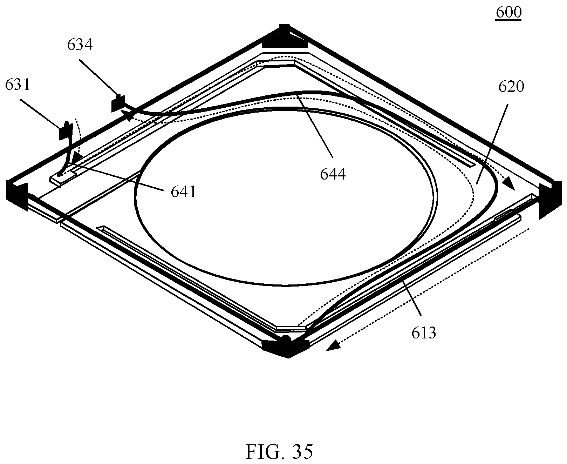

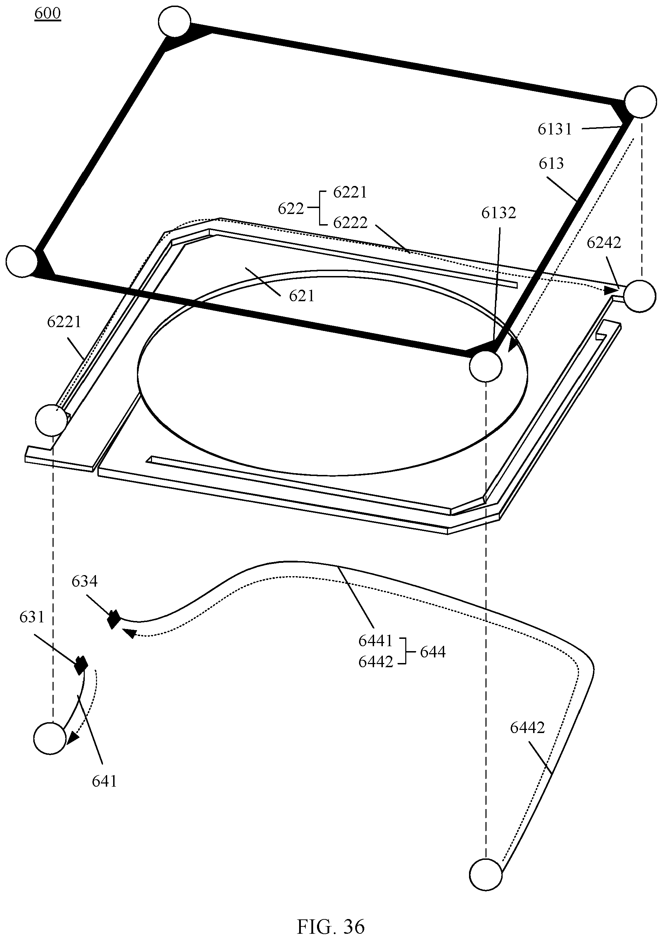

As shown in FIG. 35 and FIG. 36, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The second end part 6242 is connected to the first spring plate arm segment 6221. The first end 6131 of the SMA wire 613 may be mechanically connected to the second end part 6242 of the spring plate 620, and the second end 6132 of the SMA wire 613 may be mechanically connected to the electrical connection line 644. The electrical connection line 644 is electrically connected between the SMA wire 613 and the electrical connection port 634.

An electrical signal from the electrical connection port 631 may sequentially pass through the common electrical connection line 641, the first spring plate arm 622, the SMA wire 613, and the electrical connection line 644, and finally arrive at the electrical connection port 634 (as shown by a dashed line or a dot line in FIG. 35 and FIG. 36).

It can be learned from the foregoing description that a current on the common electrical connection line 641 may be in a direction (approximately) opposite to a current on the first spring plate arm segment 6221. A current on the first portion 6441 of the electrical connection line 644 may be in a direction (approximately) opposite to a current on the second spring plate arm segment 6222, and a current on the second portion 6442 of the electrical connection line 644 may be in a direction (approximately) opposite to a current on the SMA wire 613. It can be learned based on a position relationship among the common electrical connection line 641, the first spring plate arm 622, the SMA wire 613, and the electrical connection line 644 that a tight coupling relationship may be formed between a plurality of conductive components from the electrical connection port 631 to the electrical connection port 634.

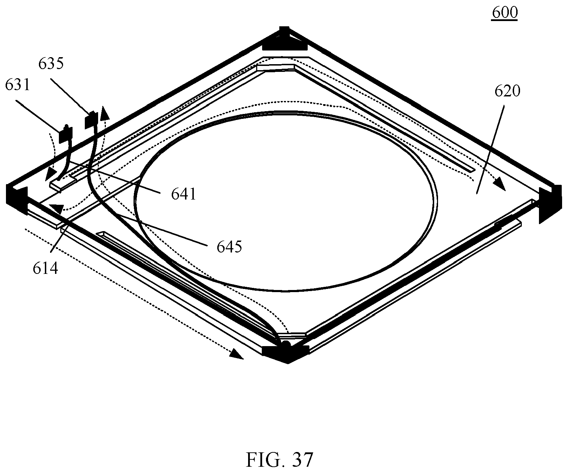

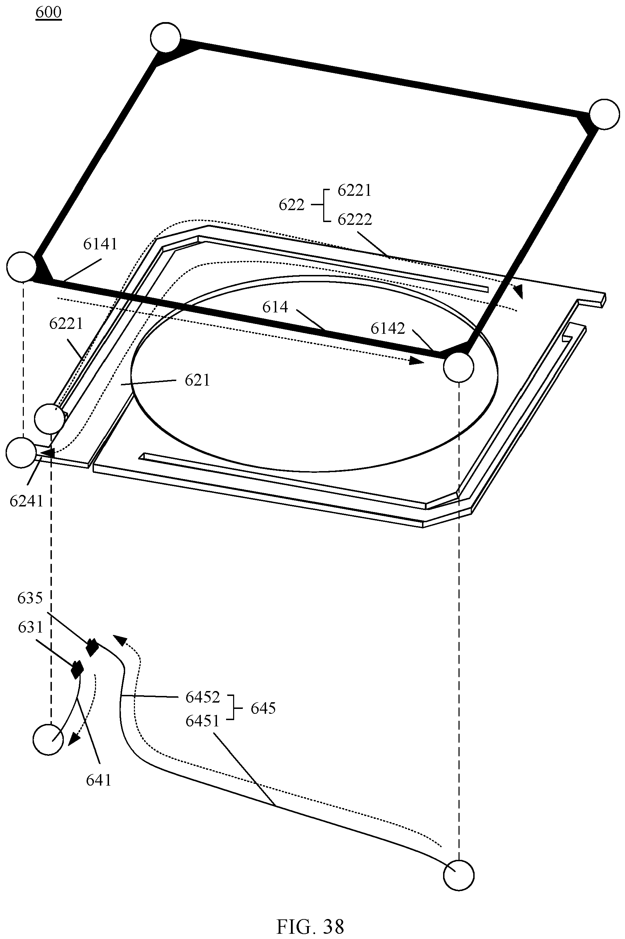

As shown in FIG. 37 and FIG. 38, the common electrical connection line 641 is electrically connected between the electrical connection port 631 and the first spring plate arm segment 6221 of the spring plate 620 (for example, the common electrical connection line 641 may be electrically connected to an open end of the first spring plate arm segment 6221). The first end part 6241 is connected to the first spring plate arm segment 6221. The first end 6141 of the SMA wire 614 is mechanically connected to the first end part 6241 of the spring plate 620. The second end 6142 of the SMA wire 614 is mechanically connected to the electrical connection line 645. The electrical connection line 645 is electrically connected between the SMA wire 614 and the electrical connection port 635.

An electrical signal from the electrical connection port 631 may sequentially pass through the common electrical connection line 641, the first spring plate arm 622, the spring plate body 621, the SMA wire 614, and the electrical connection line 645, and finally arrive at the electrical connection port 635 (as shown by a dashed line or a dot line in FIG. 37 and FIG. 38).

It can be learned from the foregoing description that a current on the first spring plate arm 622 may be in a direction (approximately) opposite to a current on the spring plate body 621. A current on the first portion 6451 of the electrical connection line 645 may be in a direction (approximately) opposite to a current on the SMA wire 614. A current on the common electrical connection line 641 may be in a direction (approximately) opposite to a current on the second portion 6452 of the electrical connection line 645. It can be learned based on a position relationship among the common electrical connection line 641, the first spring plate arm 622, the spring plate body 621, the SMA wire 614, and the electrical connection line 645 that a tight coupling relationship may be formed between a plurality of conductive components from the electrical connection port 631 to the electrical connection port 635.

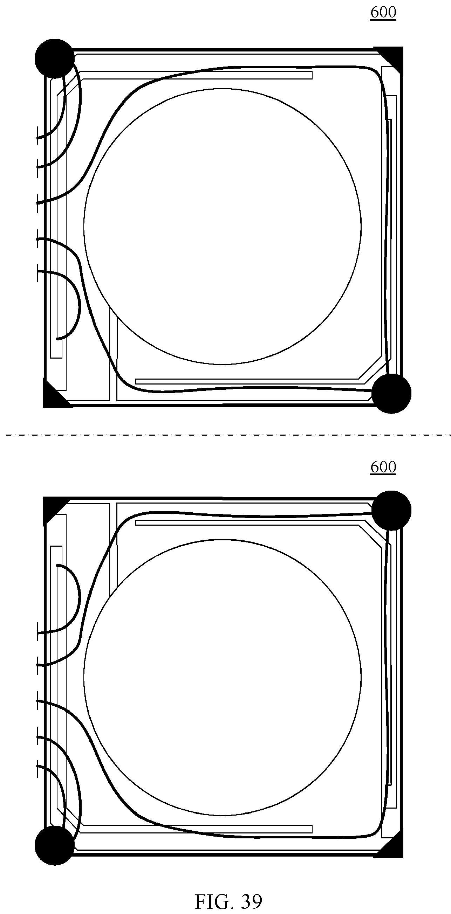

Two SMA motor 600 structures shown in FIG. 39 may be obtained by using the structures and the electrical connection relationships shown in FIG. 31 to FIG. 38. The upper figure of FIG. 39 may correspond to embodiment shown in FIG. 29 or FIG. 30. The lower figure of FIG. 39 may correspond to a mirror structure in embodiment shown in FIG. 29 or FIG. 30, and details are not described herein again.

Compared with embodiment shown in FIG. 6 or FIG. 7, the SMA motor shown in FIG. 29 or FIG. 30 may generate similar magnetic field distribution. In addition, the SMA motor shown in FIG. 29 or FIG. 30 may have a short electrical connection line, which helps reduce magnetic field intensity generated by the SMA motor

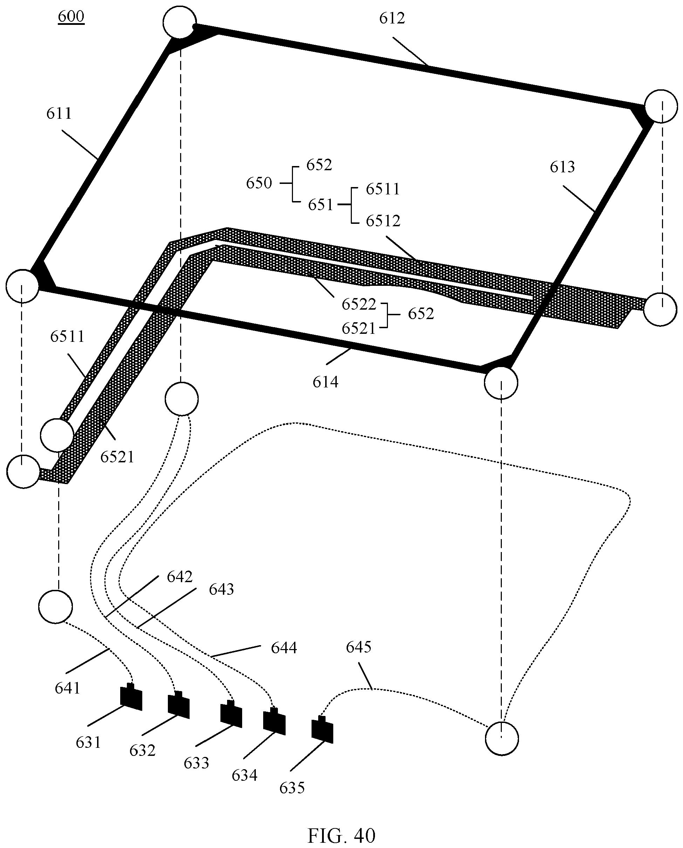

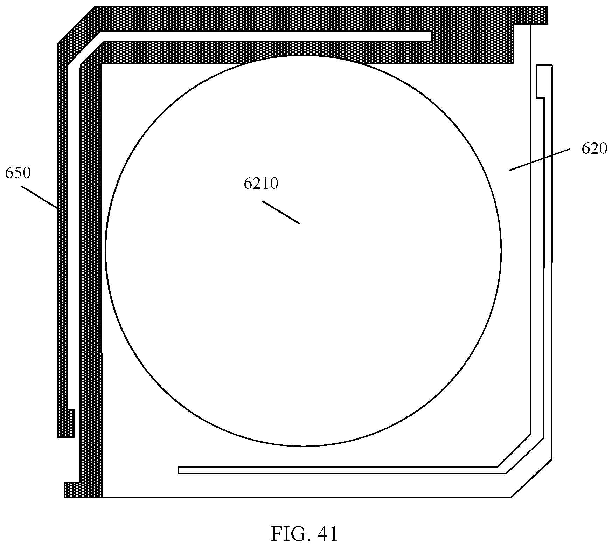

FIG. 40 shows an electrical connection line of an SMA motor 600 according to an embodiment of this application. Different from the SMA motor 600 shown in FIG. 6 and FIG. 7, the SMA motor 600 shown in FIG. 40 includes a first conductive sheet 650, and the first conductive sheet 650 may implement a main electrical connection function of the spring plate 620 shown in FIG. 6 and FIG. 7 (for ease of description, the spring plate 620 is not shown in FIG. 40). FIG. 41 shows a possible structural relationship between the first conductive sheet 650 and the spring plate 620. In an example, the first conductive sheet 650 may be aligned or correspond to the spring plate body 620.

The first conductive sheet 650 may include a first extension arm 651 and a second extension arm 652. A maximum spacing distance between the first extension arm 651 and the second extension arm 652 may be less than a preset threshold. A region in which the first extension arm 651 is connected to the second extension arm 652 may form the second end part 6242 shown in FIG. 7.

The first extension arm 651 may correspond to the first spring plate arm 622 in FIG. 7. An open end of the first extension arm 651 may form an open end of the first spring plate arm 622 shown in FIG. 7. The first extension arm 651 may include a first extension arm segment 6511 and a second extension arm segment 6512. The first extension arm segment 6511 may correspond to the first spring plate arm segment 6221 in FIG. 7. The second extension arm segment 6512 may correspond to the second spring plate arm segment 6222 in FIG. 7. In other words, the first extension arm segment 6511 may be disposed close to the SMA wire 611, and the second extension arm segment 6512 may be disposed close to the SMA wire 612. Optionally, the first extension arm segment 6511 may be disposed in parallel relative to the SMA wire 611. Optionally, the second extension arm segment 6512 may be disposed in parallel relative to the SMA wire 612.

The second extension arm 652 may correspond to a portion of a region that is of the spring plate body 621 and that is close to the first spring plate arm 622 in FIG. 7. As shown in FIG. 41, the second extension arm 652 and the first extension arm 651 may be located on a same side of the spring plate through hole 6210. An open end of the second extension arm 652 may form the first end part 6241 shown in FIG. 7. The second extension arm 652 may include a third extension arm segment 6521 and a fourth extension arm segment 6522.

The third extension arm segment 6521 may correspond to a region that is of the spring plate body 621 and that is close to the first spring plate arm segment 6221 in FIG. 7. The fourth extension arm segment 6522 may correspond to a region that is of the spring plate body 621 and that is close to the second spring plate arm segment 6222 in FIG. 7. In other words, the third extension arm segment 6521 may be disposed close to the first extension arm segment 6511, and the fourth extension arm segment 6522 may be disposed close to the second extension arm segment 6512. Optionally, the third extension arm segment 6521 may be disposed in parallel relative to the first extension arm segment 6511. Optionally, the fourth extension arm segment 6522 may be disposed in parallel relative to the second extension arm segment 6512.

It can be learned that the first extension arm 651 may replace at least some electrical connection functions of the first spring plate arm 622 in FIG. 7, and the second extension arm 652 may replace at least some electrical connection functions of the spring plate body 621 in FIG. 7.

The SMA wire 611 may be driven by using the following electrical connection line: An electrical signal from the electrical connection port 631 may sequentially pass through the common electrical connection line 641, the first extension arm 651, the second extension arm 652, the SMA wire 611, and the electrical connection line 642, and finally arrive at the electrical connection port 632. It can be learned based on a position relationship and an electrical connection relationship of these components that a tight coupling relationship may be formed between a plurality of conductive components from the electrical connection port 631 to the electrical connection port 632.

The SMA wire 612 may be driven by using the following electrical connection line: An electrical signal from the electrical connection port 631 may sequentially pass through the common electrical connection line 641, the first extension arm 651, the SMA wire 612, and the electrical connection line 643, and finally arrive at the electrical connection port 633. It can be learned based on a position relationship and an electrical connection relationship of these components that a tight coupling relationship may be formed between a plurality of conductive components from the electrical connection port 631 to the electrical connection port 633.

The SMA wire 613 may be driven by using the following electrical connection line: An electrical signal from the electrical connection port 631 may sequentially pass through the common electrical connection line 641, the first extension arm 651, the SMA wire 613, and the electrical connection line 644, and finally arrive at the electrical connection port 634. It can be learned based on a position relationship and an electrical connection relationship of these components that a tight coupling relationship may be formed between a plurality of conductive components from the electrical connection port 631 to the electrical connection port 634.

The SMA wire 614 may be driven by using the following electrical connection line: An electrical signal from the electrical connection port 631 may sequentially pass through the common electrical connection line 641, the first extension arm 651, the second extension arm 652, the SMA wire 614, and the electrical connection line 645, and finally arrive at the electrical connection port 635. It can be learned based on a position relationship and an electrical connection relationship of these components that a tight coupling relationship may be formed between a plurality of conductive components from the electrical connection port 631 to the electrical connection port 635.

In an example, the common electrical connection line 641, the SMA wire 611, the SMA wire 612, the SMA wire 613, and the SMA wire 614 may all be mechanically connected to the first conductive sheet 650 directly.

In another example, the common electrical connection line 641 may be mechanically connected to the first conductive sheet 650 by using an open end of the first spring plate arm 622 shown in FIG. 7, the SMA wire 611 and the SMA wire 614 may be mechanically connected to the first conductive sheet 650 by using the first end part 6241 shown in FIG. 7, and the SMA wire 612 and the SMA wire 613 may be mechanically connected to the first conductive sheet 650 by using the second end part 6242 shown in FIG. 7. In this case, the spring plate 620 may only have the first end part 6241 and the second end part 6242, the open end of the first spring plate arm 622 is conductive, and other regions of the spring plate 620 may be insulated.

The first conductive sheet 650 and the spring plate 620 may be disposed separately. As shown in FIG. 41, the first conductive sheet 650 may be fastened to the spring plate 620, for example, located between the spring plate 620 and the SMA wire 611.

The first conductive sheet 650 may be a flexible printed circuit (flexible printed circuit, FPC) having an electrical connection line. The first conductive sheet 650 may be further disposed or processed on the spring plate 620 shown in FIG. 6 by electroplating, transfer printing, or the like.

In the example shown in FIG. 6 or FIG. 7, the first slit 625 is provided on the spring plate 620, so that a magnetic field intensity generated by the SMA motor is reduced. However, this is not conducive to mechanical stability of the spring plate 620. If the first slit 625 is not provided, the magnetic field intensity generated by the SMA motor cannot be reduced obviously. The first conductive sheet 650 is disposed in the SMA motor, so that the spring plate 620 may be configured to resist only deformation of the SMA wire and restore the SMA wire to an original shape, and the spring plate 620 may not have an electrical connection function. This not only helps ensure mechanical stability of the spring plate 620, but also basically does not affect the magnetic field intensity generated by the SMA motor

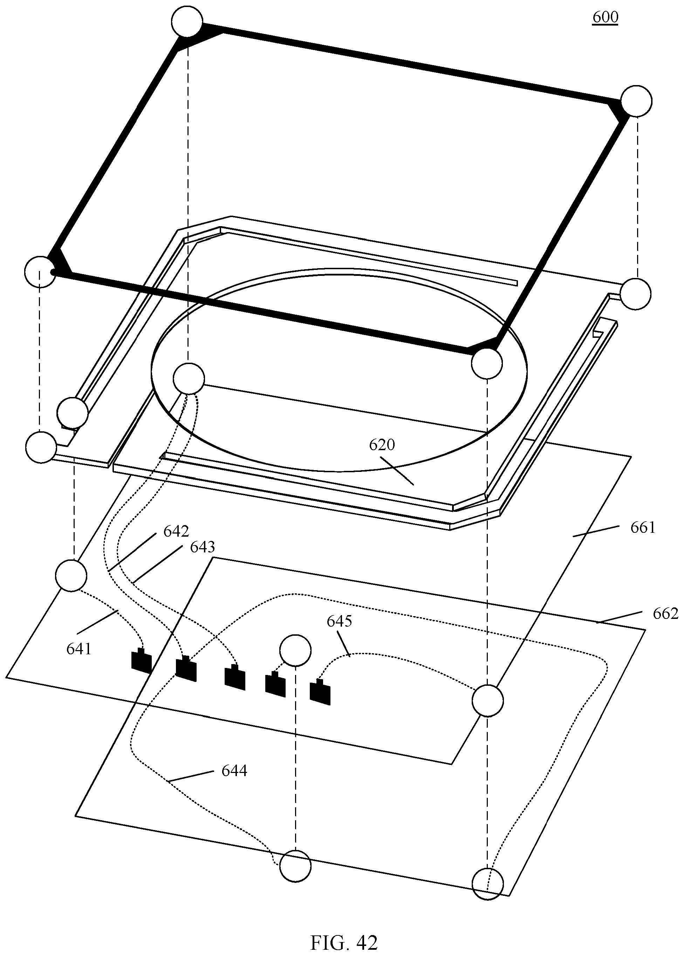

FIG. 42 is an electrical connection line of another SMA motor 600 according to an embodiment of this application. Different from the SMA motor 600 shown in FIG. 6 or FIG. 7, in the another SMA motor 600 shown in FIG. 42, the common electrical connection line 641, the electrical connection line 642, the electrical connection line 643, the electrical connection line 644, and the electrical connection line 645 shown in FIG. 42 may be disposed on different supports.

The SMA motor 600 may include a first support 661 and a second support 662. Both the first support 661 and the second support 662 may be disposed in parallel relative to the spring plate 620. The first support 661 may be located between the second support 662 and the spring plate 620.

As described above, the SMA motor 600 may include a plurality of electrical connection lines, and the plurality of electrical connection lines may include the common electrical connection line 641, the electrical connection line 642, the electrical connection line 643, the electrical connection line 644, and the electrical connection line 645. First portions of the plurality of electrical connection lines may be disposed on the first support 661, second portions of the plurality of electrical connection lines may be disposed on the second support 662, and any electrical connection line of the first portion is different from each electrical connection line of the second portion. For example, as shown in FIG. 42, the common electrical connection line 641, the electrical connection line 642, the electrical connection line 643, and the electrical connection line 645 may be disposed on the first support 661, and the electrical connection line 644 may be disposed on the second support 662.

In an example, the support may be an insulation layer of the FPC, and the electrical connection line may be a line of the FPC. In another example, the electrical connection line may be disposed on the support by electroplating, transfer printing, or the like.

It can be learned from the example shown in FIG. 42 that the electrical connection lines in the SMA motor may be located on different planes. In other words, an electrical connection manner of conductive components in the SMA motor may be flexibly set. In another example, the SMA motor may include a larger quantity of supports, and any support may be configured to dispose an electrical connection line.

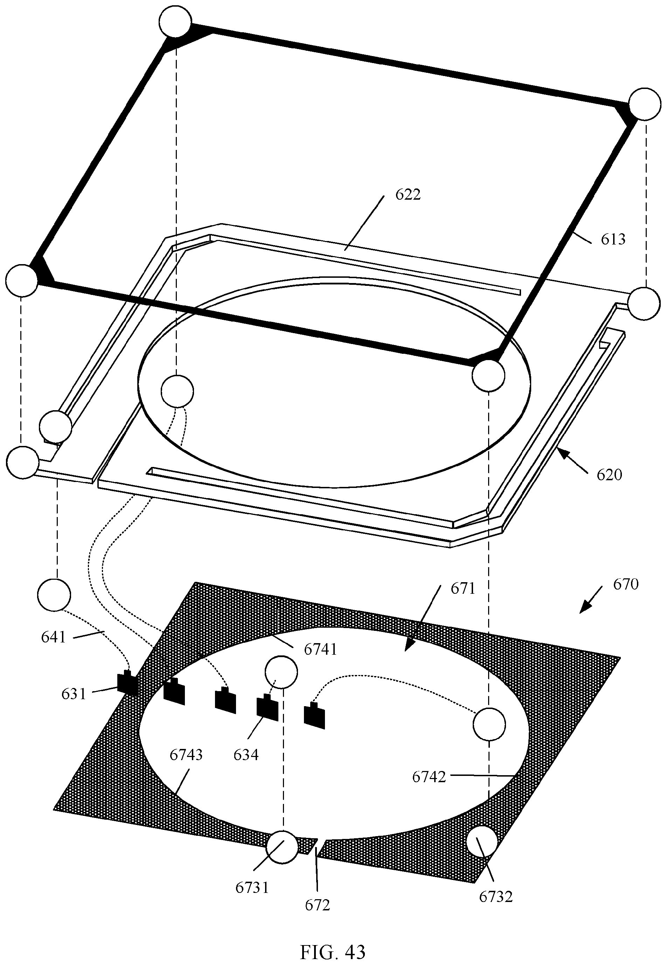

FIG. 43 is an electrical connection line of another SMA motor 600 according to an embodiment of this application. Different from the SMA motor 600 shown in FIG. 6 or FIG. 7, in the another SMA motor 600 shown in FIG. 43, an electrical connector electrically connected between the SMA wire and the electrical connection port may not be a line.

The SMA motor 600 may include a second conductive sheet 670. The second conductive sheet 670 may be disposed in parallel relative to the spring plate 620. The second conductive sheet 670 may include a conductive sheet through hole 671, and the conductive sheet through hole 671 may correspond to the lens array 2022 shown in FIG. 2, so that the lens array 2022 may pass through the conductive sheet through hole 671.

The second conductive sheet 670 may further include a second slit 672. The second slit 672 may communicate with the conductive sheet through hole 671. The second slit 672 may cut off a portion of the second conductive sheet 670, so that the second conductive sheet 670 cannot communicate with the second slit 672.

The second conductive sheet 670 may further include a first electrical connection end 6731 and a second electrical connection end 6732. The first electrical connection end 6731 and the second electrical connection end 6732 may be respectively located on two sides of the second slit 672. The first electrical connection end 6731 may be electrically connected to a target electrical connection port, and the second electrical connection end 6732 may be electrically connected to a target SMA wire. The target electrical connection port corresponds to the target SMA wire.

For example, as shown in FIG. 43, the first electrical connection end 6731 of the second conductive sheet 670 may be electrically connected to the electrical connection port 634 of the SMA motor 600, and the second electrical connection end 6732 of the second conductive sheet 670 may be electrically connected to the SMA wire 613 of the SMA motor 600. In other words, the second conductive sheet 670 shown in FIG. 43 may replace the electrical connection line 644 shown in FIG. 6 or FIG. 7.

A region between the first electrical connection end 6731 and the second electrical connection end 6732 may include a first portion 6741, a second portion 6742, and a third portion 6743. The first portion 6741 of the second conductive sheet 670 is mechanically connected between the third portion 6743 of the second conductive sheet 670 and the second portion 6742 of the second conductive sheet 670. The second portion 6742 of the second conductive sheet 670 may be closer to the SMA wire 613 than another portion of the second conductive sheet 670. The third portion 6743 of the second conductive sheet 670 may be closer to the electrical connection port 634 than another portion of the second conductive sheet 670.

The first portion 6741 of the second conductive sheet 670 may be disposed close to the first spring plate arm 622, that is, the first portion 6741 of the second conductive sheet 670 and the first spring plate arm 622 may be spaced from each other, and a maximum spacing distance between the first portion 6741 of the second conductive sheet 670 and the first spring plate arm 622 is less than a preset threshold.

The second portion 6742 of the second conductive sheet 670 may be disposed close to the SMA wire 613, that is, the second portion 6742 of the second conductive sheet 670 and the SMA wire 613 may be spaced from each other, and a maximum spacing distance between the second portion 6742 of the second conductive sheet 670 and the SMA wire 613 is less than the preset threshold.

The third portion 6743 of the second conductive sheet 670 may be disposed close to the common electrical connection line 641, that is, the third portion 6743 of the second conductive sheet 670 and the common electrical connection line 641 may be spaced from each other, and a maximum spacing distance between the third portion 6743 of the second conductive sheet 670 and the common electrical connection line 641 is less than the preset threshold.

It can be learned that, by using the second conductive sheet 670, a tight coupling relationship may be formed between a plurality of conductive components from the electrical connection port 631 to the electrical connection port 634.

It can be learned from the example shown in FIG. 42 that the conductive component in the SMA motor may be not limited to an electrical connection line, or may be an electrical connector of another structure type. In other words, a structure, a shape, a size, and the like of the conductive component in the SMA motor may be flexibly set.

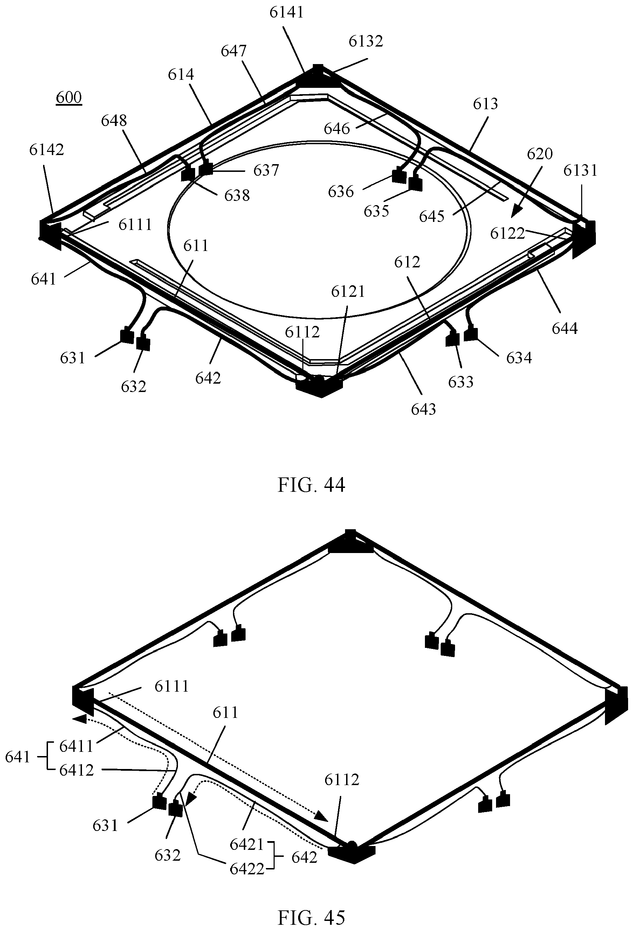

FIG. 44 is a schematic diagram of a structure of an SMA motor 600 according to an embodiment of this application. Similar to the SMA motor 600 shown in FIG. 6, the SMA motor 500 may include the SMA wire 611, the SMA wire 612, the SMA wire 613, the SMA wire 614, and the spring plate 620. Different from the example shown in FIG. 6, the SMA motor 500 may drive the SMA wire 611, the SMA wire 612, the SMA wire 613, and the SMA wire 614 by using eight electrical connection ports.

The SMA motor 600 may include an electrical connection port 631, an electrical connection port 632, an electrical connection port 633, an electrical connection port 634, an electrical connection port 635, an electrical connection port 636, an electrical connection port 637, and an electrical connection port 638. The SMA motor may further include an electrical connector 641, an electrical connector 642, an electrical connector 643, an electrical connector 644, an electrical connector 645, an electrical connector 646, an electrical connector 647, and an electrical connector 648.

The first end 6111 of the SMA wire 611 may be electrically connected to the electrical connection port 631 by using the electrical connector 641. The second end 6112 of the SMA wire 611 may be electrically connected to the electrical connection port 632 by using the electrical connector 642. In other words, the electrical connection port corresponding to the SMA wire 611 may be the electrical connection port 631 or the electrical connection port 632, and the electrical connector corresponding to the SMA wire 611 may be the electrical connector 641 or the electrical connector 642.

The first end 6121 of the SMA wire 612 may be electrically connected to the electrical connection port 633 by using the electrical connector 643. The second end 6122 of the SMA wire 612 may be electrically connected to the electrical connection port 634 by using the electrical connector 644. In other words, the electrical connection port corresponding to the SMA wire 612 may be the electrical connection port 633 or the electrical connection port 634, and the electrical connector corresponding to the SMA wire 612 may be the electrical connector 643 or the electrical connector 644.

The first end 6131 of the SMA wire 613 may be electrically connected to the electrical connection port 635 by using the electrical connector 645. The second end 6132 of the SMA wire 613 may be electrically connected to the electrical connection port 636 by using the electrical connector 646. In other words, the electrical connection port corresponding to the SMA wire 613 may be the electrical connection port 635 or the electrical connection port 636, and the electrical connector corresponding to the SMA wire 613 may be the electrical connector 645 or the electrical connector 646.

The first end 6141 of the SMA wire 614 may be electrically connected to the electrical connection port 637 by using the electrical connector 647. The second end 6142 of the SMA wire 614 may be electrically connected to the electrical connection port 638 by using the electrical connector 648. In other words, the electrical connection port corresponding to the SMA wire 614 may be the electrical connection port 637 or the electrical connection port 638, and the electrical connector corresponding to the SMA wire 614 may be the electrical connector 647 or the electrical connector 648.

With reference to FIG. 44 and FIG. 45, the following describes an electrical connection line of the SMA motor 600 by using the SMA wire 611 as an example.

The electrical connection line 641 may include a first portion 6411 and a second portion 6412. The first portion 6411 of the electrical connection line 641 may be mechanically connected to the first end 6111 of the SMA wire 611, and the second portion 6412 of the electrical connection line 641 may be mechanically connected to the electrical connection port 631. The first portion 6411 of the electrical connection line 641 and the SMA wire 611 may be spaced from each other, and a maximum spacing distance between the first portion 6411 of the electrical connection line 641 and the SMA wire 611 may be less than a preset threshold.

The electrical connection line 642 may include a first portion 6421 and a second portion 6422. The first portion 6421 of the electrical connection line 642 may be mechanically connected to the second end 6112 of the SMA wire 611, and the second portion 6422 of the electrical connection line 642 may be mechanically connected to the electrical connection port 632. The first portion 6421 of the electrical connection line 642 and the SMA wire 611 may be spaced from each other, and a maximum spacing distance between the first portion 6421 of the electrical connection line 642 and the SMA wire 611 may be less than a preset threshold.

The second portion 6412 of the electrical connection line 641 and the second portion 6422 of the electrical connection line 642 may be spaced from each other, and a maximum spacing distance between the second portion 6412 of the electrical connection line 641 and the second portion 6422 of the electrical connection line 642 may be less than the preset threshold.

The SMA wire 611 may be driven by using the following electrical connection line: An electrical signal from the electrical connection port 631 may sequentially pass through the common electrical connection line 641, the SMA wire 611, and the electrical connection line 642, and finally arrive at the electrical connection port 632. It can be learned from the position relationship and the electrical connection relationship of these components that, the first portion 6411 of the electrical connection line 641 and the SMA wire 611 may form a tight coupling relationship, the first portion 6421 of the electrical connection line 642 and the SMA wire 611 may form a tight coupling relationship, and the second portion 6412 of the electrical connection line 641 and the second portion 6422 of the electrical connection line 642 may form a tight coupling relationship.

In the examples shown in FIG. 44 and FIG. 45, a maximum spacing distance between the electrical connection port 631 and the electrical connection port 632 is less than a first preset spacing, so that the first portion 6421 of the electrical connection line 642 and the second portion 6422 of the electrical connection line 642 can cancel more interference magnetic fields from each other. In addition, the second portion 6412 of the electrical connection line 641 and the second portion 6422 of the electrical connection line 642 may form a tight coupling relationship, so that an interference magnetic field generated by the SMA motor is further reduced, and the port and the electrical connection line can be compactly disposed in the SMA motor, to improve integration of the SMA motor.

In the examples shown in FIG. 44 and FIG. 45, two electrical connection ports corresponding to the SMA wire may be disposed close to a center of the SMA wire. In another example, two electrical connection ports corresponding to the SMA wire may be disposed close to any end of the SMA wire.

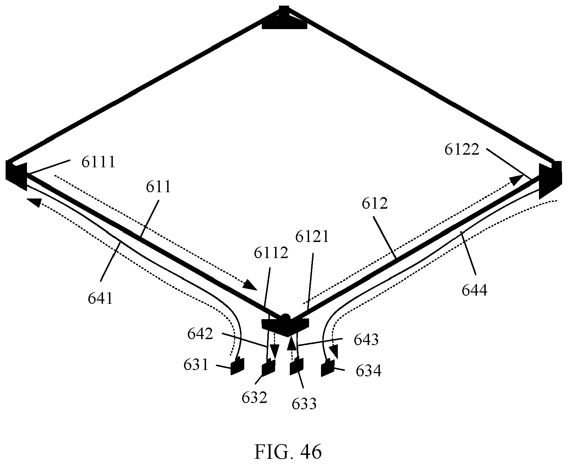

With reference to FIG. 44 and FIG. 46, the following describes another electrical connection line of the SMA motor 600 by using the SMA wire 611 and the SMA wire 612 as an example.

The second end 6112 of the SMA wire 611 may be adjacent to the first end 6121 of the SMA wire 612. The electrical connection port 631 and the electrical connection port 632 that correspond to the SMA wire 611, and the electrical connection port 633 and the electrical connection port 634 that correspond to the SMA wire 612 may be disposed close to the second end 6112 of the SMA wire 611 or the first end 6121 of the SMA wire 612, that is, a spacing distance between any two of the electrical connection port 631, the electrical connection port 632, the electrical connection port 633, and the electrical connection port 634 is less than the first preset spacing. In addition, with reference to FIG. 44, a maximum spacing distance between the electrical connection line 641 and the SMA wire 611 is less than a preset threshold, and a maximum spacing distance between the electrical connection line 644 and the SMA wire 612 is less than the preset threshold. It can be learned based on the position relationship and the electrical connection relationship of these components that the SMA wire 611 may form a tight coupling relationship with the electrical connection line 641, and the SMA wire 612 may form a tight coupling relationship with the electrical connection line 644.

Four electrical connection ports corresponding to two adjacent SMA wires are disposed near an intersection (which is actually not connected) of the two SMA wires, and the SMA wires and the electrical connection lines are compactly arranged. This helps reduce an interference magnetic field generated by the SMA motor. In addition, the ports and the electrical connection lines may be compactly arranged in the SMA motor, to improve integration of the SMA motor

In this embodiment of this application, a placement position and an angle of the electrical connector and an electrical connection relationship of a plurality of electrical connectors are properly planned, so that a tight coupling relationship can be formed between the plurality of electrical connectors in the SMA motor, to help reduce a magnetic field intensity generated by an electrical connection line of the SMA motor.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A shape memory alloy SMA motor (600), comprising:
a first SMA wire, a second SMA wire, a third SMA wire, and a fourth SMA wire that are adjacent to each other head to tail in sequence;
a spring plate (620), wherein the spring plate (620) comprises a spring plate body (621), and a first spring plate arm (622) and a second spring plate arm (623) that are located on two sides of the spring plate body (621), the spring plate body (621) comprises a first end part and a second end part, the first end part is mechanically connected to the first SMA wire and the fourth SMA wire, the second end part is mechanically connected to the second SMA wire and the third SMA wire, the first spring plate arm (622) is connected to the second end part and extends to the first end part, and the second spring plate arm (623) is connected to the first end part and extends to the second end part, so that the first spring plate arm (622) resists deformation of the first SMA wire and the second SMA, and the second spring plate arm (623) resists deformation of the third SMA wire and the fourth SMA wire;
a first electrical connection port, wherein the first electrical connection port is electrically connected to a first end of the first SMA wire by using a first electrical connector; and
a second electrical connection port, wherein the second electrical connection port is electrically connected to a second end of the first SMA wire by using a second electrical connector, wherein
the first electrical connector has a tight coupling relationship with one or more of the first SMA wire, the first electrical connector, and the second electrical connector.

2. The SMA motor (600) according to claim 1, wherein the first electrical connector comprises a first electrical connection portion, and any one of the first SMA wire, the first electrical connector, and the second electrical connector comprises a second electrical connection portion, wherein
the first electrical connection portion is spaced from the second electrical connection portion, a maximum spacing distance between the first electrical connection portion and the second electrical connection portion is less than a preset threshold, and when the first SMA wire is driven, directions of a current on the first electrical connection portion and a current on the second electrical connection portion are opposite, to form the tight coupling relationship.

3. The SMA motor (600) according to claim 1 or 2, wherein a spacing between the first electrical connection port (631) and the second electrical connection port (632) is less than a first preset spacing.

4. The SMA motor (600) according to any one of claims 1 to 3, wherein the first electrical connector comprises:
a conductive component, wherein the conductive component comprises a first electrical connection region and a second electrical connection region, there is the tight coupling relationship between the first electrical connection region and the second electrical connection region, the first end of the first SMA wire is electrically connected to the first electrical connection port by using the first electrical connection region and the second electrical connection region, and a first end of the second SMA wire is electrically connected to the first electrical connection port by using the second electrical connection region; and
the SMA motor (600) further comprises:
a third electrical connection port, wherein the third electrical connection port is electrically connected to a second end of the second SMA wire by using a third electrical connector.

5. The SMA motor (600) according to claim 4, wherein the second electrical connection region is electrically connected between the first electrical connection port (631) and the first electrical connection region, the first electrical connection region and the second electrical connection region are disposed opposite to and spaced from each other in a horizontal direction of the second electrical connection region, and a maximum spacing distance between the first electrical connection region and the second electrical connection region in the horizontal direction is less than the preset threshold, so that when the conductive component is driven, the first electrical connection region and the second electrical connection region form the tight coupling relationship.

6. The SMA motor (600) according to claim 4 or 5, wherein
the first electrical connection region comprises a first end part (6241) and a second end part (6242), the second end part (6242) is electrically connected between the first electrical connection region and the second electrical connection region, the first end part (6241) is mechanically connected to the first end of the first SMA wire, and the first end part (6241) or the second end part (6242) is mechanically connected to the first end of the second SMA wire.

7. The SMA motor (600) according to any one of claims 4 to 6, wherein the second electrical connector (642) comprises a first portion, the first portion of the second electrical connector (642) is mechanically connected to the second end (6112) of the first SMA wire (611), and a maximum spacing distance between the first portion of the second electrical connector (642) and the first SMA wire (611) is less than the preset threshold, so that when the first SMA wire is driven, the first portion of the second electrical connector (642) and the first SMA wire form the tight coupling relationship.

8. The SMA motor (600) according to any one of claims 4 to 7, wherein any two of the second electrical connection region, the second SMA wire, and the third electrical connector have the tight coupling relationship.

9. The SMA motor (600) according to any one of claims 4 to 8, wherein the second electrical connection region comprises a first segment, and a maximum spacing distance between the first segment and the second SMA wire (612) is less than the preset threshold, so that when the second SMA wire (612) is driven, the first segment and the second SMA wire (612) form the tight coupling relationship.

10. The SMA motor (600) according to claim 9, wherein the third electrical connector (643) comprises a first portion, the first portion of the third electrical connector (643) is mechanically connected to the second end (6122) of the second SMA wire (612), the second electrical connection region further comprises a second segment, and a maximum spacing distance between the first portion of the third electrical connector (643) and the second segment of the second electrical connection region is less than the preset threshold, so that when the second SMA wire (612) is driven, the first portion of the third electrical connector (643) and the second segment of the second electrical connection region form the tight coupling relationship.

11. The SMA motor (600) according to any one of claims 4 to 8, wherein the third electrical connector (645) comprises a first portion, the first portion of the third electrical connector (645) is mechanically connected to the second end (6142) of the second SMA wire (614), and a maximum spacing distance between the second SMA wire (614) and the first portion of the third electrical connector (645) is less than the preset threshold, so that when the second SMA wire (614) is driven, the first portion of the third electrical connector (643) and the second SMA wire (614) form the tight coupling relationship.

12. The SMA motor (600) according to any one of claims 4 to 11, wherein a first end of the third SMA wire is electrically connected to the first electrical connection port by using the second electrical connection region, and the SMA motor (600) further comprises:
a fourth electrical connection port, wherein the fourth electrical connection port is electrically connected to a second end of the third SMA wire by using a fourth electrical connector

13. The SMA motor (600) according to claim 12, wherein the fourth electrical connector has the tight coupling relationship with at least one of the third SMA wire and the second electrical connection region.

14. The SMA motor (600) according to claim 12 or 13, wherein the fourth electrical connector (644) comprises a first portion and a second portion, the first portion of the fourth electrical connector (644) is electrically connected between the fourth electrical connection port (634) and the second portion of the fourth electrical connector (644), the second portion of the fourth electrical connector (644) is mechanically connected to the second end (6132) of the third SMA wire (613), a maximum spacing distance between the first portion of the fourth electrical connector (644) and the second electrical connection region is less than the preset threshold, and a maximum spacing distance between the second portion of the fourth electrical connector (644) and the third SMA wire (613) is less than the preset threshold, so that when the second SMA wire (614) is driven, the first portion of the fourth electrical connector (644) and the second electrical connection region form the tight coupling relationship, and the second portion of the fourth electrical connector (644) and the third SMA wire (613) form the tight coupling relationship.

15. The SMA motor (600) according to any one of claims 4 to 14, wherein a first end (6141) of the fourth SMA wire (614) is electrically connected to the first electrical connection port (631) by using the first electrical connection region and the second electrical connection region, and the SMA motor (600) further comprises:
a fifth electrical connection port (635), wherein the fifth electrical connection port (635) is electrically connected to a second end (6142) of the fourth SMA wire (614) by using a fifth electrical connector (645), wherein
the fifth electrical connector (645) comprises a first portion, the first portion of the fifth electrical connection port (635) is mechanically connected to the second end (6142) of the fourth SMA wire (614), and a maximum spacing distance between the first portion of the fifth electrical connector (645) and the fourth SMA wire (614) is less than the preset threshold, so that when the fourth SMA wire (614) is driven, the first portion of the fifth electrical connector (645) and the fourth SMA wire (614) form the tight coupling relationship.

16. The SMA motor (600) according to any one of claims 1 to 3, wherein the first electrical connector comprises:
a conductive component, wherein the conductive component comprises a second electrical connection region, the first SMA wire is electrically connected to the first electrical connection port by using the second electrical connection region, and a first end of the second SMA wire is electrically connected to the first electrical connection port by using the second electrical connection region; and
the SMA motor (600) further comprises:
a third electrical connection port, wherein the third electrical connection port is electrically connected to a second end of the second SMA wire by using a third electrical connector, wherein
the first SMA wire and the second electrical connection region have the tight coupling relationship, and the second SMA wire and the third electrical connector have the tight coupling relationship.

17. The SMA motor (600) according to claim 16, wherein
the conductive component comprises a second end part (6242), the second electrical connection region is electrically connected between the first electrical connection port (631) and the second end part (6242), and the first end (6121) of the first SMA wire (612) is mechanically connected to the second end part (6242); and
the second electrical connection region comprises a first segment, and a maximum spacing distance between the first SMA wire (612) and the first segment of the second electrical connection region is less than the preset threshold, so that when the first SMA wire (612) is driven, the first SMA wire (612) and the first segment of the second electrical connection region form the tight coupling relationship.

18. The SMA motor (600) according to claim 17, wherein the second electrical connector (643) comprises a first portion, the first portion of the second electrical connector (643) is mechanically connected to the second end (6122) of the first SMA wire (612), the second electrical connection region further comprises a second segment, and a maximum spacing distance between the first portion of the second electrical connector (643) and the second segment of the second electrical connection region is less than the preset threshold, so that when the first SMA wire (612) is driven, the first portion of the second electrical connector (643) and the second segment of the second electrical connection region form the tight coupling relationship.

19. The SMA motor (600) according to any one of claims 16 to 18, wherein the third electrical connector (644) comprises a first portion and a second portion, the first portion of the third electrical connector (644) is electrically connected between the third electrical connection port (634) and the second portion of the third electrical connector (644), the second portion of the third electrical connector (644) is mechanically connected to the second end (6132) of the second SMA wire (613), a maximum spacing distance between the first portion of the third electrical connector (644) and the second electrical connection region is less than the preset threshold, and a maximum spacing distance between the second portion of the third electrical connector (644) and the second SMA wire (613) is less than the preset threshold, so that when the second SMA wire (613) is driven, the first portion of the third electrical connector (644) and the second electrical connection region form the tight coupling relationship, and the second portion of the third electrical connector (644) and the second SMA wire (613) form the tight coupling relationship.

20. The SMA motor (600) according to any one of claims 4 to 19, wherein the first electrical connector further comprises:
a common electrical connector (641), wherein the common electrical connector (641) is electrically connected between the first electrical connection port (631) and the second electrical connection region, and the common electrical connector (641) has the tight coupling relationship with at least one of the second electrical connector and the third electrical connector

21. The SMA motor (600) according to claim 20, wherein the second electrical connector comprises a second portion, the second portion of the second electrical connector is mechanically connected to the second electrical connection port, and a maximum spacing distance between the second portion of the second electrical connector and the common electrical connector (641) is less than the preset threshold, so that when the common electrical connector (641) is driven, the second portion of the second electrical connector and the common electrical connector (641) form the tight coupling relationship.

22. The SMA motor (600) according to any one of claims 4 to 21, wherein the first electrical connection port, the second electrical connection port, and the third electrical connection port are located on a same side of the SMA motor (600).

23. The SMA motor (600) according to any one of claims 4 to 22, wherein the conductive component is the spring plate (620), the first electrical connection region is a partial region that is of the spring plate body (621) and that is close to the first spring plate arm (622), and the second electrical connection region is the first spring plate arm (622).

24. The SMA motor (600) according to claim 23, wherein the spring plate body (621) further comprises a spring plate through hole (6210) and a first slit (625), and the first slit (625) communicates with the spring plate through hole (6210), so that a region, other than the first electrical connection region, of the spring plate body (621) is open.

25. The SMA motor (600) according to any one of claims 9, 10, 17, and 18, wherein the conductive component is the spring plate (620), the first electrical connection region is a partial region that is of the spring plate body (621) and that is close to the first spring plate arm (622), the second electrical connection region is the first spring plate arm (622), the first segment is a second spring plate arm segment (6222) of the first spring plate arm (622), and the spring plate (620) meets L₁≤9L₂/10, wherein L₁ is a length of the second spring plate arm segment (6222), and L₂ is a width of the spring plate (620) in a length direction of the second spring plate arm segment (6222).

26. The SMA motor (600) according to any one of claims 4 to 22, wherein the conductive component is a first conductive sheet (650), the first conductive sheet (650) comprises a first extension arm (651) and a second extension arm (652), the first electrical connection region is the second extension arm (652), and the second electrical connection region is the first extension arm (651).

27. The SMA motor (600) according to claim 26, wherein the first conductive sheet (650) is a flexible printed circuit FPC.

28. The SMA motor (600) according to claim 3, wherein the first electrical connector (641) and the first SMA wire (611) has the tight coupling relationship, and the SMA motor (600) further comprises:
a third electrical connection port (633), wherein the third electrical connection port (633) is electrically connected to a first end (6121) of the second SMA wire (612) by using a third electrical connector (643), the first end (6121) of the second SMA wire (612) is adjacent to the second end of the first SMA wire (611), and a spacing between the third electrical connection port (633) and the second electrical connection port (632) is less than the first preset spacing; and
a fourth electrical connection port (634), wherein the fourth electrical connection port (634) is electrically connected to a second end (6122) of the second SMA wire (612) by using a fourth electrical connector (644), the fourth electrical connector (644) and the second SMA wire (612) have the tight coupling relationship, and a spacing between the third electrical connection port (633) and the fourth electrical connection port (634) is less than the first preset spacing.

29. The SMA motor (600) according to any one of claims 1 to 28, wherein the first spring plate arm (622) further comprises a plurality of bent portions (810), and a minimum spacing between two adjacent bent portions (810) is greater than a second preset spacing.

30. A motor module (202), comprising a lens array (2022) and the SMA motor (600) according to any one of claims 1 to 29, wherein one end of an SMA wire is connected to the lens array (2022), and the other end of the SMA wire is fastened in the motor module (202).

31. A camera module (200), comprising a lens array (2022), a circuit board (203), and the SMA motor (600) according to any one of claims 1 to 29, wherein
one end of an SMA wire is connected to the lens array (2022), and the other end of the SMA wire is fastened in the camera module (200), and
a driver module is disposed on the circuit board (203), and the driver module is electrically connected to a first electrical connection port and a second electrical connection port.

32. An electronic device (100), comprising the SMA motor (600) according to any one of claims 1 to 29.
